(19) **Europäisches Patentamt / European Patent Office / Office européen des brevets**

(11) **EP 4 707 990 A1**

(12) **EUROPEAN PATENT APPLICATION**
published in accordance with Art. 153(4) EPC

(43) Date of publication:
**11.03.2026 Bulletin 2026/11**

(21) Application number: **24881013.7**

(22) Date of filing: **28.05.2024**

(51) International Patent Classification (IPC):
***G06F 1/16*** *(2006.01)*

(52) Cooperative Patent Classification (CPC):
**G06F 1/16**

(86) International application number:
**PCT/CN2024/095773**

(87) International publication number:
**WO 2025/086634 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.10.2023 CN 202311426569**

(71) Applicant: **Huawei Technologies Co., Ltd.
Shenzhen, Guangdong 518129 (CN)**

(72) Inventors:
• **WANG, Neng**
 **Shenzhen, Guangdong 518129 (CN)**
• **LI, Ying**
 **Shenzhen, Guangdong 518129 (CN)**
• **YANG, Jiangtao**
 **Shenzhen, Guangdong 518129 (CN)**
• **HAN, Ping**
 **Shenzhen, Guangdong 518129 (CN)**
• **LUO, Yuchen**
 **Shenzhen, Guangdong 518129 (CN)**

(74) Representative: **Isarpatent
Patent- und Rechtsanwälte Partg mbB
Friedrichstraße 31
80801 München (DE)**

(54) **FOLDING SCREEN CONTROL METHOD AND ELECTRONIC DEVICE**

(57) This application provides a foldable screen control method and an electronic device, and relates to the field of electronic technologies. The method includes: receiving a folding operation performed on a foldable screen, and sending first prompt information in response to a folding sequence anomaly of the foldable screen in response to the folding operation. The foldable screen includes a first screen, a second screen, a third screen, a first folding axis, and a second folding axis. The first folding axis is located between the first screen and the second screen and is configured to allow the first screen to be folded or unfolded relative to the second screen. The second folding axis is located between the second screen and the third screen and is configured to allow the third screen to be folded or unfolded relative to the second screen. In a correct folding sequence, the third screen is first folded and the first screen is then folded. Technical solutions provided in this application can help a user perform folding in a correct folding sequence, improving user's operation experience.

| Receive a folding operation performed on a foldable screen | ∼ S110 |
| Send, in response to the folding operation, first prompt information when a folding sequence anomaly of the foldable screen is detected | ∼ S120 |

**FIG. 4**

EP 4 707 990 A1

## Description

This application claims priority to Chinese Patent Application No. 202311426569.X, filed with the China National Intellectual Property Administration on October 27, 2023 and entitled "FOLDABLE SCREEN CONTROL METHOD AND ELECTRONIC DEVICE", which is incorporated herein by reference in its entirety.

## TECHNICAL FIELD

This application relates to the field of electronic technologies, and in particular, to a foldable screen control method and an electronic device.

## BACKGROUND

Currently, electronic devices such as mobile phones and tablet computers have been widely used in people's daily life and work. With advancement of screen technologies, a display screen of an electronic device gradually develops toward a larger screen, to provide users with more abundant information and better visual experience.

An excessively large display screen of an electronic device affects portability of the electronic device. Therefore, an electronic device with a foldable screen emerges. A foldable screen can present different physical forms, such as an unfolded form and a folded form, based on operations of a user. The foldable screen in the unfolded form may be used as a large screen. The foldable screen in the folded form may be conveniently carried by the user.

While the foldable screen provides large-screen experience for the user, a foldable structure of the foldable screen also imposes requirements on operations of the user. Therefore, how to improve user's operation experience is a technical problem to be resolved in the art.

## SUMMARY

In view of this, this application provides a foldable screen control method and an electronic device, to improve operation experience of a user.

To achieve the foregoing objective, according to a first aspect, an embodiment of this application provides a foldable screen control method, applied to an electronic device with a foldable screen, where the method includes:

receiving a folding operation performed on the foldable screen, where the foldable screen includes a first screen, a second screen, a third screen, a first folding axis, and a second folding axis, the first folding axis is located between the first screen and the second screen and is configured to allow the first screen to be folded or unfolded relative to the second screen, the second folding axis is located between the second screen and the third screen and is configured to allow the third screen to be folded or unfolded relative to the second screen, and in a correct folding sequence, the third screen is first folded and the first screen is then folded; and

sending first prompt information in response to a folding sequence anomaly of the foldable screen in response to the folding operation.

According to the foldable screen control method provided in embodiments of this application, after receiving a folding operation performed by a user on the foldable screen, in response to the folding operation, the electronic device may send, in the case of a folding sequence anomaly of the foldable screen, prompt information in response to the anomaly. This can help the user perform folding in a correct folding sequence, improving user's operation experience, and reducing impact of user's folding errors on a service life of the electronic device.

In a possible implementation of the first aspect, the first prompt information is sent in response to the folding sequence anomaly of the foldable screen when a first target condition is met; and

the first target condition includes that: duration of the folding sequence anomaly reaches first duration, or a touch operation performed on a first target region is detected, or the folding sequence anomaly of the foldable screen is detected in a plurality of detection manners.

According to the foregoing implementation, false triggering can be reduced, and accuracy of a control result can be improved.

In a possible implementation of the first aspect, the folding sequence anomaly of the foldable screen includes that: a difference between a first included angle and a second included angle is less than a preset threshold, where the first included angle is an included angle between the first screen and the second screen, and the second included angle is an included angle between the second screen and the third screen.

In the foregoing implementation, whether a folding sequence of the foldable screen is abnormal is determined based on an included angle relationship between adjacent screens of the foldable screen, so that the folding sequence anomaly of the foldable screen can be determined early, improving timeliness of detection of the folding sequence anomaly.

In a possible implementation of the first aspect, the folding sequence anomaly of the foldable screen includes that: the first included angle is less than a preset angle, and the difference between the first included angle and the second included angle is less than the preset threshold.

In the foregoing implementation, the first included angle is limited to be less than the preset angle to determine the folding sequence anomaly of the foldable screen, so that conflicts with other folding operations can be reduced, improving accuracy of a control result.

In a possible implementation of the first aspect, a first magnet is correspondingly disposed in one of the first screen and the second screen, a Hall effect sensor is correspondingly disposed in the other, and a second magnet is correspondingly disposed in the third screen; in a folded form, the third screen is located between the first screen and the second screen, projections of the first magnet, the second magnet, and the Hall effect sensor overlap on the second screen, a first magnetic pole of the first magnet and a second magnetic pole of the second magnet face the Hall effect sensor, and polarity of the first magnetic pole is opposite to polarity of the second magnetic pole; and

the electronic device determines the folding sequence anomaly of the foldable screen when the Hall effect sensor senses that the first magnetic pole approaches, but does not sense the second magnetic pole or senses that magnetic field strength of the second magnetic pole is less than first strength.

In the foregoing implementation, whether a folding sequence of the foldable screen is abnormal is determined based on a magnetic induction relationship between adjacent screens of the foldable screen. The required magnetic induction components have low costs, so that hardware costs can be reduced.

In a possible implementation of the first aspect, a magnet is correspondingly disposed in one of the first screen and the second screen, and a Hall effect sensor is correspondingly disposed in the other; in a folded form, the third screen is located between the first screen and the second screen, and projections of the magnet and the Hall effect sensor overlap on the second screen; and

the electronic device determines the folding sequence anomaly of the foldable screen when the Hall effect sensor senses the magnet and senses that magnetic field strength is greater than target strength.

In the foregoing implementation, whether a folding sequence of the foldable screen is abnormal is determined based on a magnetic induction relationship between adjacent screens of the foldable screen. The required magnetic induction components have low costs, so that hardware costs can be reduced.

In a possible implementation of the first aspect, the first prompt information includes: prompt information for prompting a folding sequence error and/or prompt information for prompting a correct folding sequence.

According to the foregoing implementation, it is convenient for the user to know a folding sequence error, and it is also convenient for the user to know a correct folding sequence, thereby improving user experience.

In a possible implementation of the first aspect, the first prompt information includes at least one of the following: interface display information, vibration information, sound information, and light information. In this way, flexibility and richness of information prompting can be improved.

In a possible implementation of the first aspect, in the folded form, a thickness of the first folding axis in a first direction is greater than a thickness of the second folding axis in the first direction, and the first direction is perpendicular to a display plane of the second screen.

In a possible implementation of the first aspect, the method further includes:

receiving a target operation performed on the foldable screen, where the target operation is for changing a magnitude of an included angle between a first target screen and a second target screen, the first target screen and the second target screen are two adjacent screens of the foldable screen, the first target screen and the second target screen are foldable around a target folding axis in the first direction, and the target folding axis is a folding axis between the first target screen and the second target screen; and

sending second prompt information, in response to the target operation, in response to a case in which the first target screen and the second target screen are folded in a second direction, where the second direction is a direction opposite to the first direction.

In the foregoing implementation, after receiving a target operation (for changing a magnitude of an included angle between adjacent screens of the foldable screen) of the user on the foldable screen, in response to the target operation, the electronic device may send, in a case that the foldable screen is folded in an opposite direction, prompt information in response to the case. This can help the user perform folding in a correct folding direction, improving user's operation experience, and reducing impact of user's folding errors on a service life of the electronic device.

In a possible implementation of the first aspect, the second prompt information is sent, when a second target condition is met, in response to the case in which the first target screen and the second target screen are folded in the second direction; and

the second target condition includes that: duration for which the first target screen and the second target screen are folded in the second direction reaches second duration, or a touch operation performed on a second target region is detected, or that the first target screen and the second target screen are folded in the second direction is detected in a plurality of detection manners.

According to the foregoing implementation, false triggering can be reduced, and accuracy of a control result can be improved.

In a possible implementation of the first aspect, that the first target screen and the second target screen are folded in the second direction includes that: the included angle between the first target screen and the second target screen is greater than a second threshold, and the second threshold is greater than 180°.

In the foregoing implementation, whether the foldable screen is folded in an opposite direction is determined based on a magnitude of an included angle between adjacent screens of the foldable screen, so that a folding sequence anomaly of the foldable screen can be determined conveniently and quickly. In addition, a sensor, existing in the foldable screen, for detecting a screen angle can be used, reducing hardware costs.

In a possible implementation of the first aspect, a pressure sensor is disposed between the first target screen and the second target screen, and the electronic device determines, when pressure detected by the pressure sensor is greater than a pressure threshold, that the first target screen and the second target screen are folded in the second direction.

In the foregoing implementation, whether the foldable screen is folded in an opposite direction is determined based on the pressure, so that the folding sequence anomaly of the foldable screen can be determined quickly, improving timeliness of detection of folding in the opposite direction.

According to a second aspect, an embodiment of this application provides a foldable screen control apparatus, used in an electronic device with a foldable screen, where the apparatus includes:

an input module, configured to receive a folding operation performed on the foldable screen, where the foldable screen includes a first screen, a second screen, a third screen, a first folding axis, and a second folding axis, the first folding axis is located between the first screen and the second screen and is configured to allow the first screen to be folded or unfolded relative to the second screen, the second folding axis is located between the second screen and the third screen and is configured to allow the third screen to be folded or unfolded relative to the second screen, and in a correct folding sequence, the third screen is first folded and the first screen is then folded; and

a processing module, configured to send first prompt information in response to a folding sequence anomaly of the foldable screen in response to the folding operation.

In a possible implementation of the second aspect, the processing module is specifically configured to send the first prompt information in response to the folding sequence anomaly of the foldable screen when a first target condition is met, where
the first target condition includes that: duration of the folding sequence anomaly reaches first duration, or a touch operation performed on a first target region is detected, or the folding sequence anomaly of the foldable screen is detected in a plurality of detection manners.

In a possible implementation of the second aspect, the folding sequence anomaly of the foldable screen includes that: a difference between a first included angle and a second included angle is less than a preset threshold, where the first included angle is an included angle between the first screen and the second screen, and the second included angle is an included angle between the second screen and the third screen.

In a possible implementation of the second aspect, the folding sequence anomaly of the foldable screen includes that: the first included angle is less than a preset angle, and the difference between the first included angle and the second included angle is less than the preset threshold.

In a possible implementation of the second aspect, a first magnet is correspondingly disposed in one of the first screen and the second screen, a Hall effect sensor is correspondingly disposed in the other, and a second magnet is correspondingly disposed in the third screen; in a folded form, the third screen is located between the first screen and the second screen, projections of the first magnet, the second magnet, and the Hall effect sensor overlap on the second screen, a first magnetic pole of the first magnet and a second magnetic pole of the second magnet face the Hall effect sensor, and polarity of the first magnetic pole is opposite to polarity of the second magnetic pole; and
the processing module is further configured to determine the folding sequence anomaly of the foldable screen when the Hall effect sensor senses that the first magnetic pole approaches, but does not sense the second magnetic pole or senses that magnetic field strength of the second magnetic pole is less than first strength.

In a possible implementation of the second aspect, a magnet is correspondingly disposed in one of the first screen and the second screen, and a Hall effect sensor is correspondingly disposed in the other; in a folded form, the third screen is located between the first screen and the second screen, and projections of the magnet and the Hall effect sensor overlap on the second screen; and

the processing module is further configured to determine the folding sequence anomaly of the foldable screen when the Hall effect sensor senses the magnet and senses that magnetic field strength is greater than target strength.

In a possible implementation of the second aspect, the first prompt information includes: prompt information for prompting a folding sequence error and/or prompt information for prompting a correct folding sequence.

In a possible implementation of the second aspect, the first prompt information includes at least one of the following: interface display information, vibration information, sound information, and light information.

In a possible implementation of the second aspect, in the folded form, a thickness of the first folding axis in a first direction is greater than a thickness of the second folding axis in the first direction, and the first direction is perpendicular to a display plane of the second screen.

In a possible implementation of the second aspect, the input module is further configured to receive a target operation performed on the foldable screen, where the target operation is for changing a magnitude of an included angle between a first target screen and a second target screen, the first target screen and the second target screen are two adjacent screens of the foldable screen, the first target screen and the second target screen are foldable around a target folding axis in the first direction, and the target folding axis is a folding axis between the first target screen and the second target screen; and

the processing module is further configured to send second prompt information, in response to the target operation, in response to a case in which the first target screen and the second target screen are folded in a second direction, where the second direction is a direction opposite to the first direction.

In a possible implementation of the second aspect, the processing module is specifically configured to send the second prompt information, when a second target condition is met, in response to the case in which the first target screen and the second target screen are folded in the second direction, where

the second target condition includes that: duration for which the first target screen and the second target screen are folded in the second direction reaches second duration, or a touch operation performed on a second target region is detected, or that the first target screen and the second target screen are folded in the second direction is detected in a plurality of detection manners.

In a possible implementation of the second aspect, that the first target screen and the second target screen are folded in the second direction includes that: the included angle between the first target screen and the second target screen is greater than a second threshold, and the second threshold is greater than 180°.

In a possible implementation of the second aspect, a pressure sensor is disposed between the first target screen and the second target screen, and the processing module is further configured to determine, when pressure detected by the pressure sensor is greater than a pressure threshold, that the first target screen and the second target screen are folded in the second direction.

According to a third aspect, an embodiment of this application provides an electronic device, including a memory and a processor. The memory is configured to store a computer program. The processor is configured to perform the method according to the first aspect or any one of the implementations of the first aspect when calling the computer program.

According to a fourth aspect, an embodiment of this application provides a computer-readable storage medium, storing a computer program. When the computer program is executed by a processor, the method according to the first aspect or any one of the implementations of the first aspect is implemented.

According to a fifth aspect, an embodiment of this application provides a computer program product. When the computer program product runs on an electronic device, the electronic device is enabled to perform the method according to the first aspect or any one of the implementations of the first aspect.

According to a sixth aspect, an embodiment of this application provides a chip system, including a processor. The processor is coupled to a memory. The processor executes a computer program stored in the memory, to implement the method according to the first aspect or any one of the implementations of the first aspect. The chip system may be a single chip or a chip module including a plurality of chips.

It may be understood that, for beneficial effects of the second aspect to the sixth aspect, refer to related descriptions in the first aspect. Details are not described herein again.

## BRIEF DESCRIPTION OF DRAWINGS

FIG. 1 is a diagram of forms of an electronic device according to an embodiment of this application;
FIG. 2 is a diagram of forms of another electronic device according to an embodiment of this application;
FIG. 3 is a diagram of a brake mechanism according to an embodiment of this application;
FIG. 4 is a schematic flowchart of a foldable screen control method according to an embodiment of this application;
FIG. 5 is a diagram of orientation vectors of a foldable screen according to an embodiment of this application;

FIG. 6 is a diagram of orientation vectors of another foldable screen according to an embodiment of this application;

FIG. 7 is a diagram of rotation angles of a foldable screen according to an embodiment of this application;

FIG. 8 is a diagram of comparison between folding operations according to an embodiment of this application;

FIG. 9 is a diagram of a detection process of a folding sequence anomaly according to an embodiment of this application;

FIG. 10 is a diagram of a user interface according to an embodiment of this application;

FIG. 11 is a diagram of a detection manner of a folding sequence anomaly according to an embodiment of this application;

FIG. 12 and FIG. 13 are diagrams of comparison between some other folding operations according to embodiments of this application;

FIG. 14 is a diagram of a working principle of a Hall effect sensor according to an embodiment of this application;

FIG. 15 and FIG. 16 are diagrams of comparison between still some other folding operations according to embodiments of this application;

FIG. 17 is a schematic flowchart of another foldable screen control method according to an embodiment of this application;

FIG. 18 is a diagram of an outward folding angle according to an embodiment of this application;

FIG. 19 is a diagram of a reverse folding detection structure according to an embodiment of this application;

FIG. 20 is a diagram of another user interface according to an embodiment of this application;

FIG. 21 is a diagram of a structure of a foldable screen control apparatus according to an embodiment of this application; and

FIG. 22 is a diagram of a structure of an electronic device according to an embodiment of this application.

## DESCRIPTION OF EMBODIMENTS

The following describes embodiments of this application with reference to the accompanying drawings in embodiments of this application. Terms used in implementations of embodiments of this application are merely used to explain specific embodiments of this application, but are not intended to limit this application. The following several specific embodiments may be combined with each other, and same or similar concepts or processes may not be described repeatedly in some embodiments.

A foldable screen in embodiments of this application is first described. In embodiments of this application, an "electronic device with a foldable screen" may also be referred to as a "foldable electronic device", "foldable screen device", "electronic device", or the like for short, and is specifically an electronic device whose display screen is foldable.

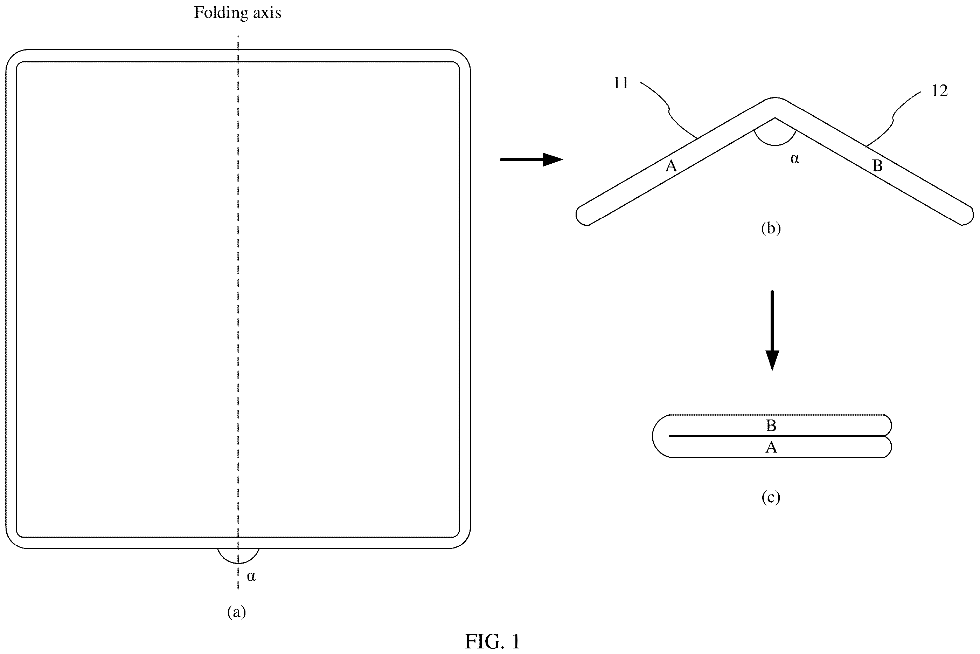

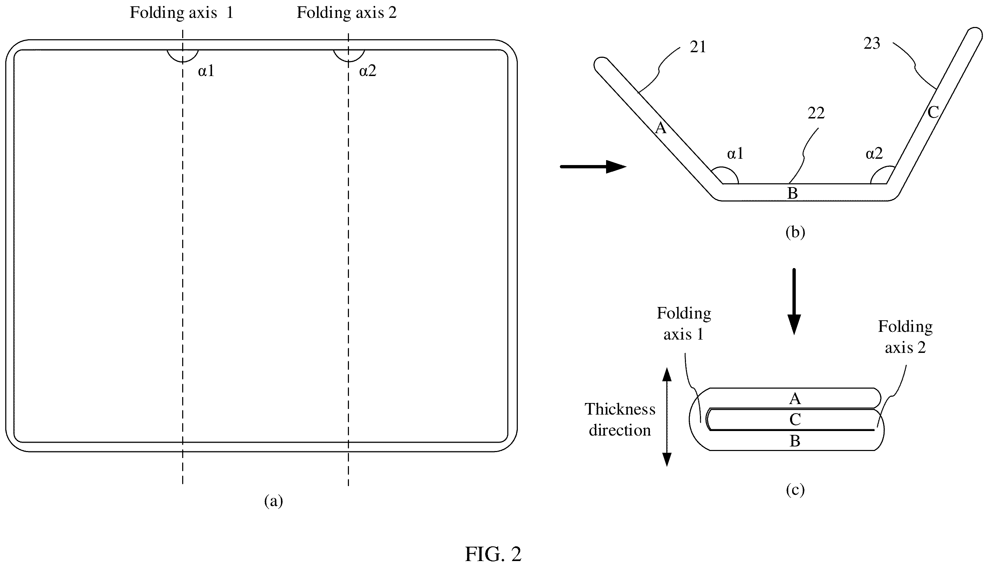

The foldable screen can be folded to form a plurality of screens. For example, as shown in (a) in FIG. 1, after a foldable screen of an electronic device is folded around a folding axis, a screen A 11 and a screen B 12 shown in (b) in FIG. 1 can be formed. In another example, after a foldable screen shown in (a) in FIG. 2 is folded around folding axes, a screen A 21, a screen B 22, and a screen C 23 shown in (b) in FIG. 2 can be formed.

A physical form of the foldable screen may include an unfolded form, a folded form, and a half-folded form (which may also be referred to as a half-unfolded form). Herein, (a) in FIG. 1 and (a) in FIG. 2 are diagrams of forms of the foldable screens in the unfolded form, (b) in FIG. 1 and (b) in FIG. 2 are diagrams of forms of the foldable screens in the half-folded form, and (c) in FIG. 1 and (c) in FIG. 2 are diagrams of forms of the foldable screens in the folded form.

A value range of an included angle between two adjacent screens of the foldable screen may be [0°, 180°]. In the unfolded form, an included angle between two adjacent screens of the foldable screen is 180°. For example, as shown in (a) in FIG. 1, an included angle $\alpha$ between the screen A 11 and the screen B 12 is 180°. In another example, as shown in (a) in FIG. 2, an included angle $\alpha 1$ between the screen A 21 and the screen B 22 is 180°, and an included angle $\alpha 2$ between the screen B 22 and the screen C 23 is 180°.

In the half-folded form, a value range of an included angle between two adjacent screens of the foldable screen is (0°, 180°). For example, as shown in (b) in FIG. 1, an included angle between the screen A 11 and the screen B 12 is $\alpha \in (0°, 180°)$; and as shown in (b) in FIG. 2, an included angle between the screen A 21 and the screen B 22 is $\alpha 1 \in (0°, 180°)$, and an included angle between the screen B 22 and the screen C 23 is $\alpha 2 \in (0°, 180°)$.

In the folded form, an included angle between two adjacent screens of the foldable screen is 0°. For example, as shown in (c) in FIG. 1, an included angle $\alpha$ between the screen A 11 and the screen B 12 is 0°. In another example, as shown in (c) in FIG. 2, an included angle $\alpha 1$ between the screen A 21 and the screen B 22 and an included angle $\alpha 2$ between the screen B 22 and the screen C 23 are both 0°.

It may be understood that, in the unfolded form, an included angle between two adjacent screens of the foldable screen may have a slight deviation from 180°. For example, an included angle between two adjacent screens in the unfolded form is 175° or 185°. Similarly, in the folded form, an included angle between two adjacent screens of the foldable screen may have a slight deviation from 0°. For example, an included angle between two adjacent screens in the folded form is 5°.

In an embodiment of this application, there may be two folding manners of adjacent screens of the foldable screen. One is inward flipping and folding (inward folding for short). In this folding manner, after two screens are folded, light-emitting surfaces of the two screens face each other. The other is outward flipping and folding (outward folding for short). In this folding manner, after two screens are folded, light-emitting surfaces of the two screens face away from each other.

For example, a folding manner of the foldable screen shown in FIG. 1 is outward folding. The screen A 11 and the screen B 12 may be flipped and folded outward around the folding axis, and then form the form shown in (b) in FIG. 1; and the screen A 11 and the screen B 12 may continue to be flipped and folded, and then form the form shown in (c) in FIG. 1.

For the foldable screen shown in FIG. 2, a folding manner of the screen A 21 and the screen B 22 and a folding manner of the screen B 22 and the screen C 23 are both inward folding. After the screen A 21 and the screen B 22 shown in (a) in FIG. 2 are folded inward around the folding axis 1, and the screen B 22 and the screen C 23 are folded inward around the folding axis 2, the form shown in (b) in FIG. 2 can be formed; and the screen A 21, the screen B 22, and the screen C 23 may continue to be flipped and folded, and then form the form shown in (c) in FIG. 2.

It may be understood that the folding manner of the foldable screen shown in FIG. 1 may alternatively be inward folding. For the foldable screen shown in (a) in FIG. 2, both the folding manner of the screen A 21 and the screen B 22 and the folding manner of the screen B 22 and the screen C 23 may alternatively be outward folding; or the folding manner of the screen A 21 and the screen B 22 may be outward folding, and the folding manner of the screen B 22 and the screen C 23 may be inward folding; or the folding manner of the screen A 21 and the screen B 22 may be inward folding, and the folding manner of the screen B 22 and the screen C 23 may be outward folding. The folding manner of the foldable screen is not particularly limited in embodiments of this application.

In FIG. 1 and FIG. 2, the foldable screen is folded longitudinally into a plurality of screens distributed left and right. In another embodiment, the foldable screen of the electronic device may be folded horizontally into a plurality of screens distributed up and down.

It may be understood that a quantity of screens included in the foldable screen is obtained and display screen division and naming are performed by using a folding axis, around which the foldable screen is folded, as a reference line. The plurality of screens described herein do not indicate an actual panel structure of the foldable screen.

In some embodiments, the foldable screen may be a flexible foldable screen. A folding axis of the flexible foldable screen is made of a flexible material, and another part of the flexible foldable screen may be made of a rigid material or a flexible material. The flexible foldable screen may be folded around the folding axis to form a plurality of screens. The plurality of screens formed after the flexible foldable screen is folded are a complete screen of an integrated structure that is just folded into at least two parts, where each part is correspondingly referred to as a screen.

In some embodiments, the foldable screen may alternatively be a multi-screen foldable screen. The multi-screen foldable screen may include a plurality of independent screens. The plurality of screens may be sequentially connected by a folding axis, and each screen may rotate around a folding axis connected to the screen, implementing folding of the multi-screen foldable screen.

For some multi-fold foldable screens (that is, a foldable screen including at least three screens), from an unfolded form or a half-folded form to a folded form, the user needs to fold the foldable screen in a specific folding sequence. For example, the foldable screen shown in FIG. 2 correspondingly includes two folding axes. As shown in (c) in FIG. 2, a direction perpendicular to a display plane of the screen B in a folded state is defined as a thickness direction of the folding axis. Thicknesses of the two folding axes of the foldable screen are different. The thickness of the folding axis 2 is less than the thickness of the folding axis 1. During folding, the screen C needs to be folded first, and then the screen A is folded. If the screen A is folded first and then the screen C is folded, the electronic device cannot be closed. In addition, without support of the screen C between the screen A and the screen B, the folding axis 1 supports the screen A and the screen C alone, and then receives excessive pressure, consequently affecting a service life of the folding axis 1. If the screen A is added between the screen B and the screen C, the folding axis 2 also receives an excessive tensile force, consequently affecting a service life of the folding axis 2. In addition, if the foldable screen is not closed flush, the display screen is unevenly stressed, affecting a service life of the display screen.

It may be understood that, for an outward-foldable screen device and another foldable screen device that is inward-foldable and outward-foldable, a case in which the user needs to perform folding in a specific folding sequence may also exist due to a size limitation or other reasons. For ease of description, in an embodiment of this application, an inward-foldable screen device is mainly used as an example for description.

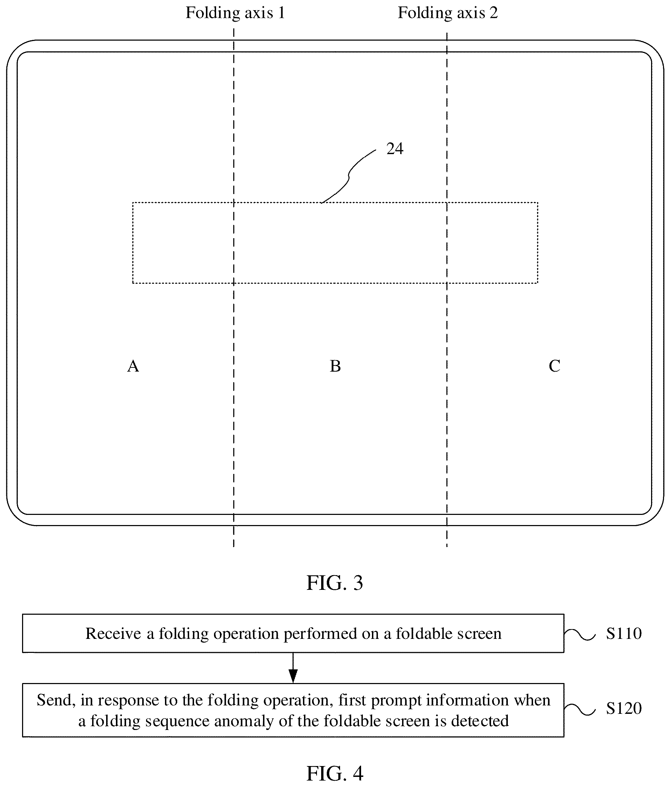

To help a user fold an electronic device in a correct folding sequence, as shown in FIG. 3, in a possible implementation, a brake mechanism 24 is disposed in the electronic device. The brake mechanism 24 is a linkage mechanism. When a folding axis 2 is opened (that is, a screen B and a screen C are unfolded), a motion structure on the folding axis 2 drives the brake mechanism 24, and the brake mechanism 24 locks a folding axis 1, so that the folding axis 1 cannot be closed, that is, a screen A and the screen B are prevented from being folded. When the folding axis 2 is closed (that is, the screen B and the screen C are folded), the motion structure on the folding axis 2 drives the brake mechanism 24, and the brake mechanism 24 unlocks the folding axis 1, so that the folding axis 1 can be closed, that is, the screen A and the screen B are allowed to be folded. In this way, an operation of first folding the screen A and then folding the screen C by the user is limited, helping the user fold the electronic device in a correct folding sequence of first folding the screen C and then folding the screen A.

However, in the foregoing implementation, the brake mechanism separates internal space of the screen B. This is not conducive to an internal structure design. For example, a large battery may be placed originally. After the brake mechanism is used, to avoid the brake mechanism, the battery needs to be split into two small batteries. This affects battery capacity. In addition, when finding that the electronic device cannot be folded, the user may not immediately realize that a folding sequence is incorrect, but instead, consider that a folding force is insufficient and further fold the electronic device hard, consequently damaging the brake mechanism, and affecting a service life of the electronic device.

Therefore, embodiments of this application provide a foldable screen control method, so that a folding sequence of a foldable screen can be detected when a folding operation performed by a user on the foldable screen is received, and prompt information can be sent when a folding sequence anomaly of the foldable screen is detected, to help the user perform folding in a correct folding sequence, improving user's operation experience, reducing impact of user's folding errors on a service life of an electronic device, and reducing an impact of hardware modification on an internal structure design of the foldable screen.

FIG. 4 is a schematic flowchart of a foldable screen control method according to an embodiment of this application. As shown in FIG. 4, the method may include the following steps.

S110: Receive a folding operation performed on a foldable screen.

The foldable screen includes a first screen, a second screen, and a third screen that are sequentially adjacent to each other. In a correct folding sequence, folding of the third screen precedes folding of the first screen. For example, for the foldable screen shown in FIG. 2, the first screen is the screen A 21, the second screen is the screen B 22, and the third screen is the screen C 23. The following mainly uses the foldable screen shown in FIG. 2 as an example for description.

It may be understood that the foldable screen may include more screens. The first screen, the second screen, and the third screen may be any three adjacent screens of the foldable screen in a folding sequence. For ease of description, an example in which the foldable screen includes three screens is mainly used for description in this embodiment of this application.

For example, as shown in (a) in FIG. 2, the foldable screen is initially in an unfolded form. When a user wants to fold the foldable screen into a folded form, the user may fold the foldable screen, for example, fold the screen A and the screen C inward in sequence. The electronic device may determine, based on the folding operation performed by the user on the foldable screen, whether a folding sequence corresponding to the folding operation is correct or abnormal.

The electronic device may detect, by using one or more of a gravity sensor, an acceleration sensor, and a gyroscope, the folding operation performed by the user on the foldable screen. Alternatively, the electronic device may detect, by using an angle sensor disposed on a bendable part of the foldable screen, the folding operation performed by the user on the foldable screen. For example, when the angle sensor detects that an included angle between adjacent screens becomes smaller, it may be determined that the user performs the folding operation on the foldable screen. In some embodiments, the electronic device may alternatively detect, by using a physical switch disposed on a bendable part of the foldable screen, the folding operation performed by the user on the foldable screen. For example, when the user performs the folding operation on the foldable screen, the physical switch disposed on the electronic device is triggered to be turned on, and the electronic device may detect, based on the physical switch that is turned on, the folding operation performed by the user on the foldable screen.

It may be understood that a manner of detecting the folding operation by the electronic device is not limited to the foregoing examples. This is not particularly limited in embodiments of this application.

S120: Send, in response to the folding operation, first prompt information when a folding sequence anomaly of the foldable screen is detected.

After receiving the folding operation performed by the user on the foldable screen, the electronic device may detect, in response to the folding operation, whether a folding sequence (that is, a folding sequence corresponding to the folding operation) of the foldable screen is abnormal.

The following describes two implementations of detecting whether the folding sequence of the foldable screen is abnormal by using examples.

**First implementation: Detect, based on an included angle relationship between adjacent screens of the foldable screen, whether the folding sequence of the foldable screen is abnormal**

The electronic device may determine that the folding sequence of the foldable screens is abnormal when detecting that a difference obtained by subtracting an included angle (referred to as a second included angle below) between a second screen and a third screen from an included angle (referred to as a first included angle below) between a first screen and the second screen is less than a preset threshold (referred to as a first threshold below).

The electronic device may determine an included angle between adjacent screens in the following manner.

In some embodiments, a gyroscope sensor may be correspondingly disposed in each screen of the foldable screen, to measure an orientation (that is, a direction vector of the orientation) of the corresponding screen. The electronic device may determine an included angle between adjacent screens based on a change of an orientation angle that is of each screen and that is measured by the gyroscope sensor.

A coordinate system of the gyroscope sensor is a geographic coordinate system. An origin O of the geographic coordinate system is located at a point at which a carrier (that is, the device including the gyroscope sensor) is located. An x axis points to east along a local latitude line. A y axis points to north along a local meridian line. A z axis points upward along a local geographic vertical line and forms a right-handed rectangular coordinate system with the x axis and the y axis. The electronic device may measure, by using the gyroscope sensor correspondingly disposed in each screen, a direction vector of an orientation of each screen in a coordinate system of the gyroscope sensor disposed in each screen.

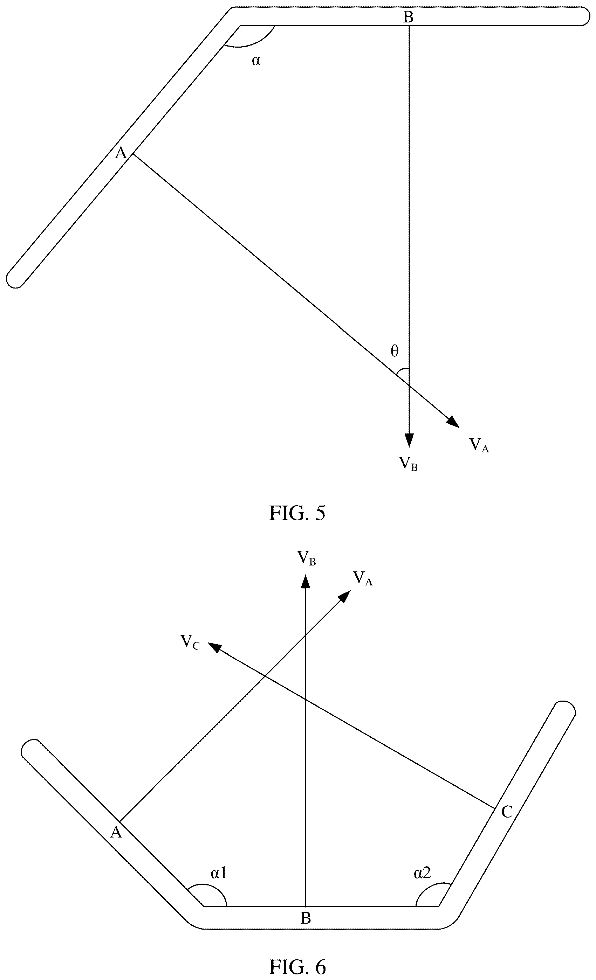

The foldable screen shown in FIG. 1 is used as an example. The foldable screen of the electronic device may be folded to form a screen A and a screen B shown in FIG. 5. A gyroscope sensor a is disposed in a housing corresponding to the screen A, and a gyroscope sensor b is disposed in a housing corresponding to the screen B. Measured by the electronic device, a direction vector of an orientation (referred to as an orientation vector for short) of the screen A in a coordinate system of the gyroscope sensor a is a vector $V_A$, and an orientation vector of the screen B in a coordinate system of the gyroscope sensor b is a vector $V_B$. An included angle $\theta$ between the vector $V_A$ and the vector $V_B$ may be calculated through the following formula (1).

$$\theta = \arccos\left(\frac{\overrightarrow{V_A} \bullet \overrightarrow{V_B}}{\left|\overrightarrow{V_A}\right| \times \left|\overrightarrow{V_B}\right|}\right) \qquad (1)$$

It can be learned from FIG. 5 that the vector $V_A$ is perpendicular to the screen A, and the vector $V_B$ is perpendicular to the screen B. Therefore, an included angle between the screen A and the screen B can be obtained: $\alpha = 180° - \theta$.

It needs to be noted that, although positions of the gyroscope sensors in the screen A and the screen B do not overlap, that is, origins of the coordinate systems of the gyroscope sensors in the screen A and the screen B do not overlap, the two coordinate systems have parallel x axes, parallel y axes, and parallel z axes. Therefore, it can be considered that the coordinate systems of the gyroscope sensors in the screen A and the screen B are parallel. In this case, although the vector $V_A$ and the vector $V_B$ are not in a same coordinate system, the included angle $\theta$ between the vector $V_A$ and the vector $V_B$ can still be calculated through the foregoing formula (1) due to the parallel axes of the two coordinate systems.

An included angle between any two adjacent screens of the foldable screen may be calculated in the foregoing manner. Correspondingly, for the foldable screen including three screens shown in FIG. 2, as shown in FIG. 6, an included angle $\alpha 1$ between a screen A and a screen B and an included angle $\alpha 2$ between the screen B and a screen C may be calculated through the following formula (2) based on an orientation vector $V_A$ of the screen A, an orientation vector $V_B$ of the screen B, and an orientation vector $V_C$ of the screen C.

$$\alpha 1 = 180° - \arccos\left(\frac{\overrightarrow{V_A} \bullet \overrightarrow{V_B}}{\left|\overrightarrow{V_A}\right| \times \left|\overrightarrow{V_B}\right|}\right)$$

$$\alpha 2 = 180° - \arccos\left(\frac{\overrightarrow{V_C} \bullet \overrightarrow{V_B}}{\left|\overrightarrow{V_C}\right| \times \left|\overrightarrow{V_B}\right|}\right) \qquad (2)$$

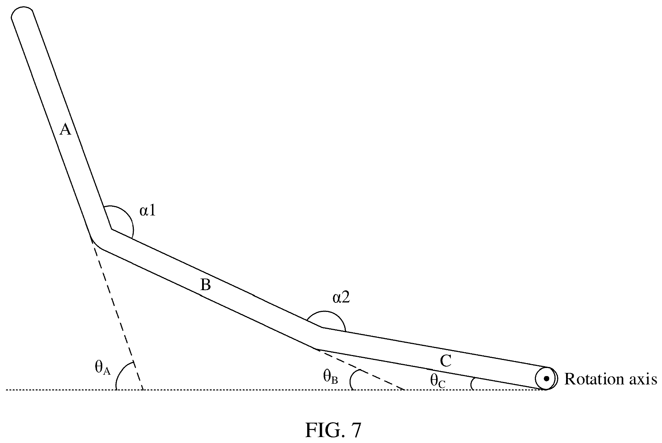

In some embodiments, one or more other sensors may cooperate to measure an included angle between adjacent screens. For example, a rotation vector sensor (integrated with an acceleration sensor, a gyroscope sensor, and a magnetometer) may be disposed in a housing corresponding to each screen of the foldable screen. The electronic device may calculate a rotation angle of each screen by using the rotation vector sensor. Rotation axes of all the screens are parallel. Therefore, the rotation axes may be combined into one rotation axis as shown in FIG. 7. For example, based on data measured by the rotation vector sensor, the electronic device determines a rotation angle $\theta_A$ of a screen A, a rotation angle $\theta_B$ of a screen B, and a rotation angle $\theta_C$ of a screen C. An included angle $\alpha 1$ between the screen A and the screen B and an included angle $\alpha 2$ between the screen B and the screen C may be calculated through the following formula (3).

$$\alpha 1 = 180° - \left( \theta_A - \theta_B \right)$$
$$\alpha 2 = 180° - \left( \theta_B - \theta_C \right) \tag{3}$$

In some other embodiments, an angle sensor may be mounted on a foldable part (for example, on a folding axis) of a folding line of the electronic device, and the electronic device may measure an included angle between adjacent screens by using the angle sensor disposed on the foldable part of the foldable screen.

It may be understood that a manner of determining an included angle between adjacent screens is not limited thereto, and the included angle between the adjacent screens may be determined in another manner. This is not particularly limited in embodiments of this application.

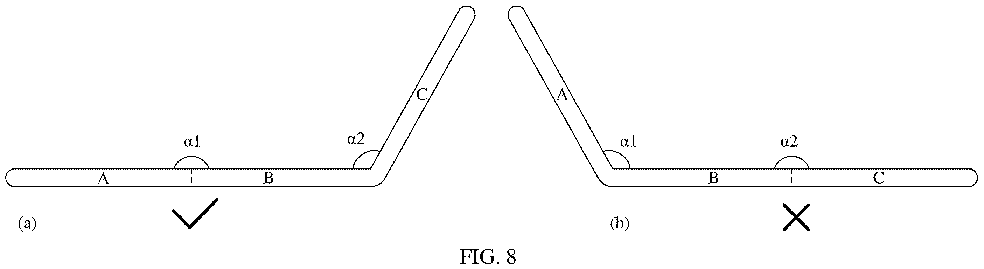

When the user folds the foldable screen, an included angle between adjacent screens of the foldable screen changes. For example, as shown in (a) in FIG. 8, if the user performs folding in a correct folding sequence, that is, first folds a screen C and then folds a screen A, during folding, an included angle $\alpha 1$ between the screen A and a screen B is usually greater than an included angle $\alpha 2$ between the screen B and the screen C; or as shown in (b) in FIG. 8, if the user performs folding in an incorrect folding sequence, that is, first folds the screen A and then folds the screen C, during folding, the included angle $\alpha 1$ between the screen A and the screen B is usually less than the included angle $\alpha 2$ between the screen B and the screen C.

Based on this, in a process in which the user performs a folding operation on the foldable screen, the electronic device may periodically measure an included angle between adjacent screens of the foldable screen, and then detect, based on a magnitude relationship of the included angle between the adjacent screens, whether a folding sequence of the foldable screen is abnormal.

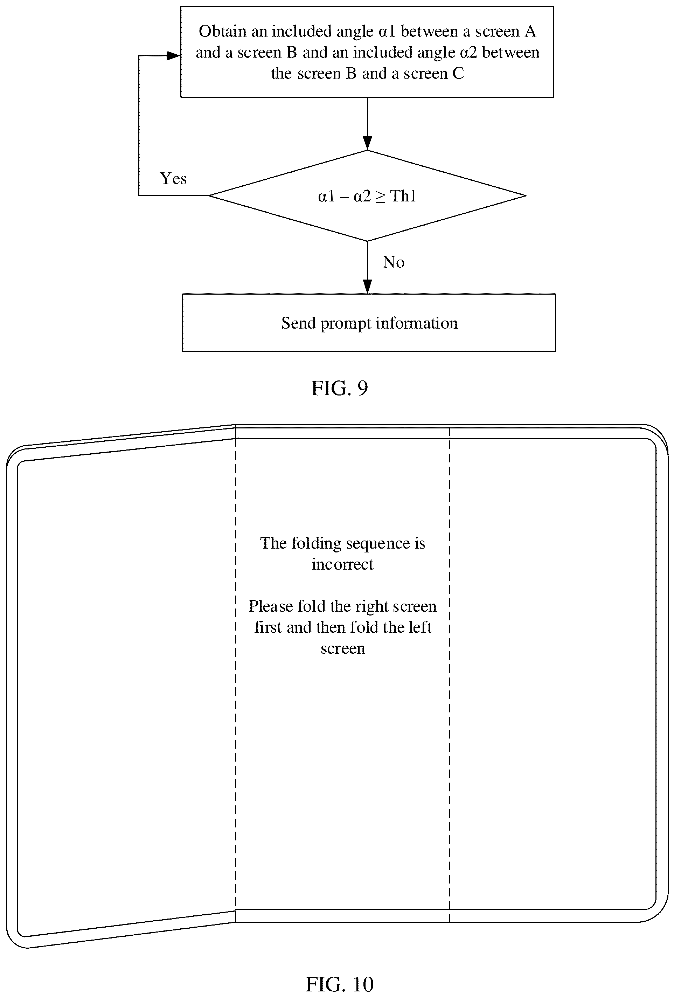

For example, as shown in FIG. 9, in each detection period, after obtaining an included angle $\alpha 1$ between a screen A and a screen B and an included angle $\alpha 2$ between the screen B and a screen C, the electronic device may determine whether a value of $\alpha 1$-$\alpha 2$ is greater than or equal to a first threshold Th1. When the value of $\alpha 1$-$\alpha 2$ is greater than or equal to the first threshold Th1, the electronic device may determine that a folding sequence of the foldable screen is normal, and continue to perform a detection process of a folding sequence in a next period. When the value of $\alpha 1$-$\alpha 2$ is less than the first threshold Th1, the electronic device may determine that a folding sequence of the foldable screen is abnormal, and then may send prompt information (that is, first prompt information) in response to a folding sequence anomaly of the foldable screen.

For the folding operation shown in (a) in FIG. 8, the electronic device may detect that a value of $\alpha 1$-$\alpha 2$ is greater than or equal to the first threshold Th1, and then determine that the folding sequence of the foldable screen is normal. For the folding operation shown in (b) in FIG. 8, the electronic device may detect that a value of $\alpha 1$-$\alpha 2$ is less than the first threshold Th1, and then determine that the folding sequence of the foldable screen is abnormal.

The first threshold Th1 may be a value greater than or equal to 0, and a specific value may be set according to an actual requirement.

The first prompt information may include prompt information for prompting a folding sequence error, and may include prompt information for prompting a correct folding sequence. The prompt information may include at least one of the following: interface display information, vibration information, sound information, and light information. The interface display information may include text information and/or graphic information. The sound information may be voice information, ringtone information, or the like. The light information may be light information including one or more colors.

For example, as shown in FIG. 10, when detecting a folding sequence anomaly of the foldable screen, the electronic device may display interface prompt information for prompting a folding sequence error: "the folding sequence is incorrect", and display interface prompt information for prompting a correct folding sequence: "please fold the right screen (namely, the screen C) first and then fold the left screen (namely, the screen A)". The interface prompt information may be displayed, based on folding status of the foldable screen, on a screen that is easy to see by the user.

For some foldable screens, a corresponding function may be triggered through a folding operation at a specific angle. For example, when the screen A or the screen C of the foldable screen is folded to a specific angle and maintained in a half-folded form, the electronic device may be triggered to change a photographing or video playing layout. Therefore, during actual application, there may be a case in which the user folds the screen A of the foldable screen to a specific angle to trigger a corresponding function. In consideration of this case, in some embodiments, the electronic device may determine a folding sequence anomaly of the foldable screen when detecting that $\alpha 1$ (namely, a first included angle) is less than a preset angle and a value of $\alpha 1$-$\alpha 2$ (that is, the first included angle minus a second included angle) is less than the first threshold Th1, to improve reliability of a detection result.

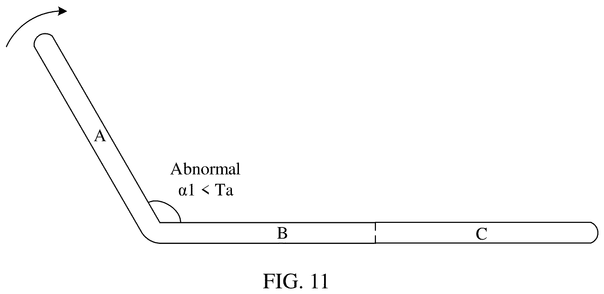

For example, as shown in FIG. 11, in a process in which the user folds the screen A of the foldable screen, when an included angle $\alpha 1$ between the screen A and the screen B is greater than or equal to a preset angle Ta, the electronic device may not consider that a folding sequence of the foldable screen is abnormal, that is, may consider that the folding sequence is normal or may not perform anomaly determining of the folding sequence. When the user continues to perform folding until the included angle $\alpha 1$ between the screen A and the screen B is less than the preset angle Ta, the electronic device may determine a folding sequence anomaly of the foldable screen.

The preset angle may be determined based on a folding angle that triggers a corresponding function. For example, the preset angle may be 90°.

In addition, in some embodiments, in a case that the first threshold Th1 is greater than 0, in a process in which the screen C is folded and then the screen A is folded, when an included angle between the screen A and the screen B is reduced to be less than Th1, the case in which the value of $\alpha1$-$\alpha2$ is less than the first threshold Th1 is also met. In consideration of this case, in some embodiments, the electronic device may determine a folding sequence anomaly of the foldable screen when detecting that $\alpha1$ (namely, the first included angle) is greater than the first threshold and the value of $\alpha1$-$\alpha2$ (that is, the first included angle minus the second included angle) is less than the first threshold Th1, to reduce false triggering, improving reliability of a detection result. In some embodiments, this case of false triggering may alternatively be reduced through anti-false triggering detection such as abnormal duration detection or touch detection described below.

**Second implementation: Detect, based on a magnetic induction relationship between adjacent screens of the foldable screen, whether the folding sequence of the foldable screen is abnormal**

Specifically, a first magnet may be correspondingly disposed in one of a first screen and a second screen, a Hall effect sensor may be correspondingly disposed in the other, and a second magnet may be correspondingly disposed in a third screen of the foldable screen. In a folded form, positions of the first magnet, the second magnet, and the Hall effect sensor correspond to each other in a thickness direction of the foldable screen, a first magnetic pole of the first magnet and a second magnetic pole of the second magnet face the Hall effect sensor, and polarity of the first magnetic pole is opposite to polarity of the second magnetic pole. The electronic device may determine a folding sequence anomaly of the foldable screen when the Hall effect sensor senses that the first magnetic pole approaches but does not sense the second magnetic pole.

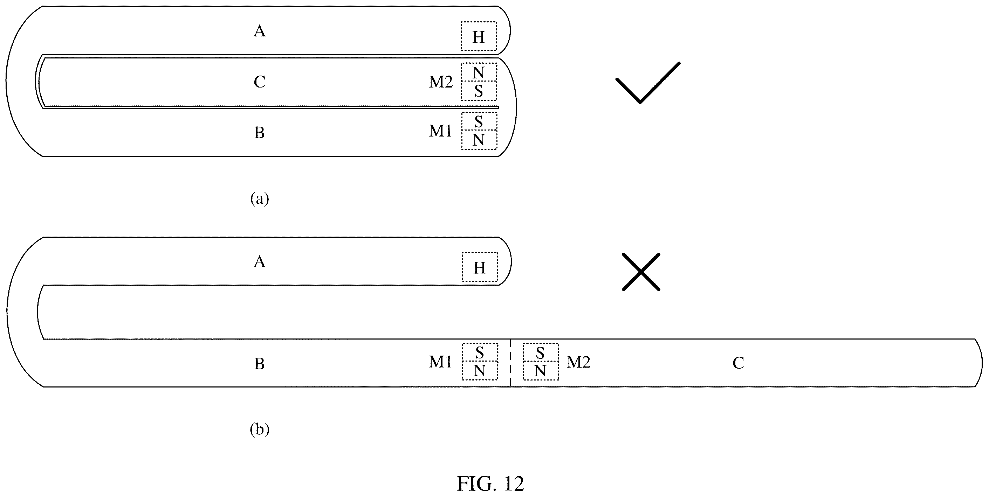

For example, as shown in (a) in FIG. 12, a Hall effect sensor H is disposed in a housing corresponding to a screen A (namely, the first screen), a first magnet M1 is disposed in a housing corresponding to a screen B, and a second magnet M2 is disposed in a housing corresponding to a screen C. In a folded form, that is, after the foldable screen is folded in a correct folding sequence, positions of the first magnet M1, the second magnet M2, and the Hall effect sensor H correspond to each other in a thickness direction of the foldable screen (herein, for example, the Hall effect sensor H is located on a side that is of the screen A and that is away from the screen B), and an S pole (namely, the first magnetic pole) of the first magnet M1 and an N pole (namely, the second magnetic pole) of the second magnet M2 face the Hall effect sensor H. The positions of the first magnet M1, the second magnet M2, and the Hall effect sensor H correspond to each other in the thickness direction of the foldable screen. Specifically, projections of the first magnet M1, the second magnet M2, and the Hall effect sensor H overlap on the screen B, and the projections of any two of the first magnet M1, the second magnet M2, and the Hall effect sensor H may fully or partially overlap.

Still refer to (a) in FIG. 12. If the user folds the foldable screen in the correct folding sequence, that is, first folds the screen C and then folds the screen A, when the user folds the screen A after folding the screen C, the Hall effect sensor H may sense that the N pole of the second magnet M2 approaches; and the Hall effect sensor H, blocked by the second magnet M2, cannot sense the S pole of the first magnet M1 or senses low magnetic field strength of the S pole of the first magnet M1.

As shown in (b) in FIG. 12, if the user folds the foldable screen in an incorrect folding sequence, that is, first folds the screen A and then folds the screen C, when the user folds the screen A, the Hall effect sensor H may sense that the S pole of the first magnet M1 approaches, but the Hall effect sensor H cannot sense the N pole of the second magnet M2 because the screen C is not folded. In this case, the electronic device may determine a folding sequence anomaly of the foldable screen.

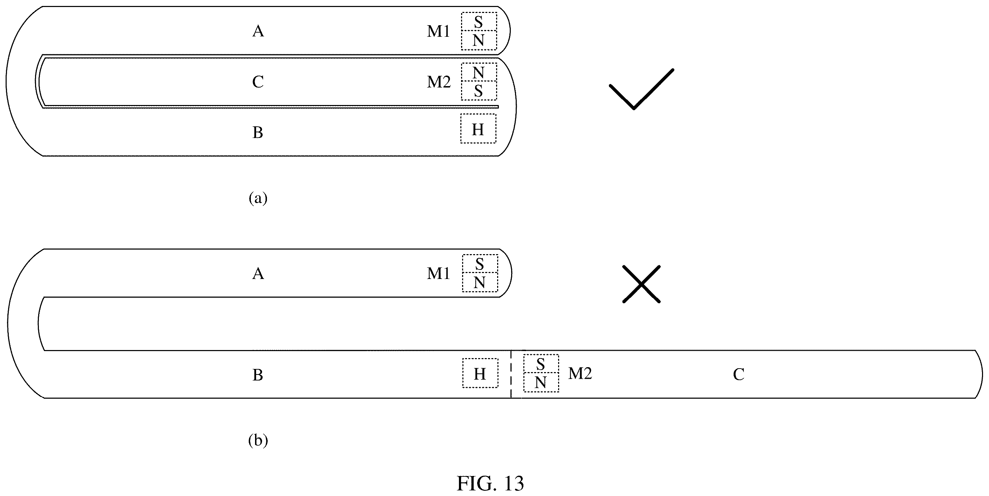

In another example, as shown in (a) in FIG. 13, a first magnet M1 is disposed in a housing corresponding to a screen A, a Hall effect sensor H is disposed in a housing corresponding to a screen B (namely, the second screen), and a second magnet M2 is disposed in a housing corresponding to a screen C. In a folded form, that is, after the foldable screen is folded in a correct folding sequence, positions of the first magnet M1, the second magnet M2, and the Hall effect sensor H correspond to each other in a thickness direction of the foldable screen (herein, for example, the Hall effect sensor H is located on a side that is of the screen B and that is close to the screen C), and an N pole (namely, the first magnetic pole) of the first magnet M1 and an S pole (namely, the second magnetic pole) of the second magnet M2 face the Hall effect sensor H.

Still refer to (a) in FIG. 13. If the user folds the foldable screen in the correct folding sequence, that is, first folds the screen C and then folds the screen A, when the user folds the screen C, the Hall effect sensor H may sense that the S pole of the second magnet M2 approaches; and when the user folds the screen A after folding the screen C, the Hall effect sensor H, blocked by the second magnet M2, cannot sense the N pole of the first magnet M1 or senses low magnetic field strength of the N pole of the first magnet M1.

As shown in (b) in FIG. 13, if the user folds the foldable screen in an incorrect folding sequence, that is, first folds the screen A and then folds the screen C, when the user folds the screen A, the Hall effect sensor H may sense that the N pole of the first magnet M1 approaches, but the Hall effect sensor H cannot sense the S pole of the second magnet M2 because the screen C is not folded. In this case, the electronic device may determine a folding sequence anomaly of the foldable screen.

When the second magnet M2 has a strong magnetic field and is close to the Hall effect sensor H, in a case that the screen C is unfolded, the Hall effect sensor H may sense the S pole of the second magnet M2. In this case, the positions of the first magnet M1, the second magnet M2, and the Hall effect sensor H may be adjusted, so that the Hall effect sensor H cannot sense the second magnet M2 in the unfolded form. Alternatively, when the Hall effect sensor H senses that the N pole of the first magnet M1 approaches, it may be further determined whether the magnetic field strength that is of the S pole of the second magnet M2 and that is sensed by the Hall effect sensor H reaches specific strength (referred to as first strength herein), and when the first strength is not reached, it may be considered that the folding sequence of the foldable screen is abnormal, to further improve accuracy of a detection result. The first strength may be greater than magnetic field strength that is of the S pole of the second magnet M2 and that can be sensed by the Hall effect sensor H in the unfolded form.

As described above, for the manners of disposing the Hall effect sensor and the magnet shown in FIG. 12 and FIG. 13, when the user folds the screen C and then folds the screen A in the correct folding sequence, blocked by the second magnet M2, the Hall effect sensor H cannot sense the first magnetic pole of the first magnet M1 or senses low magnetic field strength of the first magnetic pole of the first magnet M1; and when the user first folds the screen A in the incorrect folding sequence, the Hall effect sensor H may sense the first magnetic pole of the first magnet M1, and as the screen A approaches the screen B, magnetic field strength that is of the first magnetic pole of the first magnet M1 and that is sensed by the Hall effect sensor H may exceed magnetic field strength that is of the first magnetic pole of the first magnet M1 and that can be sensed by the Hall effect sensor H in the folded form. Based on this, in some embodiments, when detecting whether a folding sequence is abnormal, the electronic device may determine a folding sequence anomaly of the foldable screen in a case that the Hall effect sensor senses that the first magnetic pole approaches and senses that the magnetic field strength of the first magnetic pole is greater than preset strength. The preset strength may be greater than the magnetic field strength that is of the first magnetic pole of the first magnet M1 and that can be sensed by the Hall effect sensor H in the folded form. This implementation has high accuracy, and the foregoing implementation "determining a folding sequence anomaly of the foldable screen when the Hall effect sensor senses that the first magnetic pole approaches but does not sense the second magnetic pole" has higher detection timeliness. These implementations may be selected as required during specific implementation.

It may be understood that the specific position and the polarity setting manners of the first magnet, the second magnet, and the Hall effect sensor are merely examples, and are not intended to limit this application, provided that the first magnet, the second magnet, and the Hall effect sensor meet the position relationship and the polarity relationship in the folded form. For example, as shown in (a) in FIG. 12, in the folded form, the Hall effect sensor H, the first magnet M1, and the second magnet M2 are correspondingly disposed on a right side of the foldable screen. In another embodiment, the Hall effect sensor H, the first magnet M1, and the second magnet M2 may be correspondingly disposed on a middle part, a left side, or another position of the foldable screen. In some other embodiments, in the folded form, the N pole (namely, the first magnetic pole) of the first magnet M1 and the S pole (namely, the second magnetic pole) of the second magnet M2 may face the Hall effect sensor H.

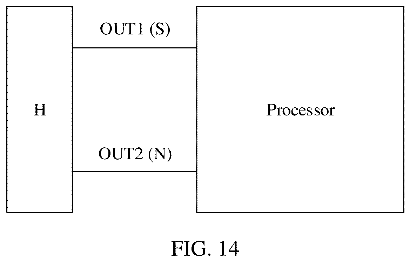

As shown in FIG. 14, the Hall effect sensor H may be connected to two ports of a processor in the electronic device through two output ends OUT1 and OUT2. The Hall effect sensor H may output a first electrical signal (for example, a high-level signal) to the processor through the output end OUT1 when sensing the S pole, and may output a second electrical signal (for example, a high-level signal) to the processor through the output end OUT2 when sensing the N pole. Correspondingly, the processor of the electronic device may determine a sensing result of the Hall effect sensor based on the received electrical signal. For example, for the structure shown in FIG. 12, when the processor receives the first electrical signal, the electronic device may determine that the Hall effect sensor H senses the S pole of the first magnet M1. If the processor continuously receives the first electrical signal within a recent period of time (target duration), and duration is less than the target duration, it may be determined that the Hall effect sensor H senses that the S pole of the first magnet M1 approaches.

The Hall effect sensor H may further output electrical signals of different magnitudes based on sensed magnetic field strength. For example, higher sensed magnetic field strength indicates a larger level value of an output electrical signal. Based on this, when the processor continuously receives the first electrical signal within a recent period of time and a value of the received first electrical signal gradually increases, it may alternatively be determined that the Hall effect sensor H senses that the S pole of the first magnet M1 approaches.

In some embodiments, a magnet may be correspondingly disposed in one of the first screen and the second screen, and a Hall effect sensor may be correspondingly disposed in the other. In a folded form, positions of the magnet and the Hall effect sensor correspond to each other in a thickness direction of the foldable screen. When the Hall effect sensor senses the magnet and senses that magnetic field strength is greater than target strength, the electronic device may determine a folding sequence anomaly of the foldable screen.

The target strength may be determined based on actually required sensing sensitivity, and a specific value is not particularly limited in embodiments of this application.

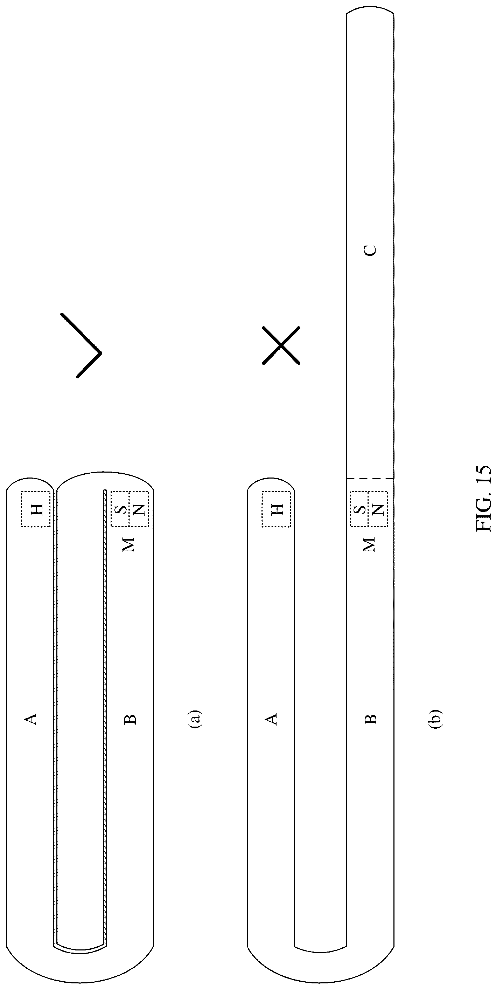

For example, as shown in (a) in FIG. 15, a Hall effect sensor H is disposed in a housing corresponding to a screen A, and a magnet M is disposed in a housing corresponding to a screen B. In a folded form, that is, after the foldable screen is folded in a correct folding sequence, positions of the magnet M and the Hall effect sensor H correspond to each other in a thickness direction of the foldable screen (herein, for example, the Hall effect sensor H is located on a side that is of the screen A and that is away from the screen B). If the user folds the foldable screen in the correct folding sequence, that is, first folds a screen C and then folds the screen A, when the user folds the screen A after folding the screen C, blocked by the screen C, the Hall effect sensor H cannot sense the magnet M or senses very low magnetic field strength of the magnet M. The positions of the magnet M and the Hall effect sensor H correspond to each other in the thickness direction of the foldable screen. Specifically, projections of the magnet M and the Hall effect sensor H may fully or partially overlap on the screen B.

As shown in (b) in FIG. 15, if the user folds the foldable screen in an incorrect folding sequence, that is, first folds the screen A and then folds the screen C, when the user folds the screen A, the Hall effect sensor H may sense the magnet M, and as the screen A approaches the screen B, the Hall effect sensor H may sense relatively high magnetic field strength. When the magnetic field strength sensed by the Hall effect sensor is greater than target strength, the electronic device may determine a folding sequence anomaly of the foldable screen.

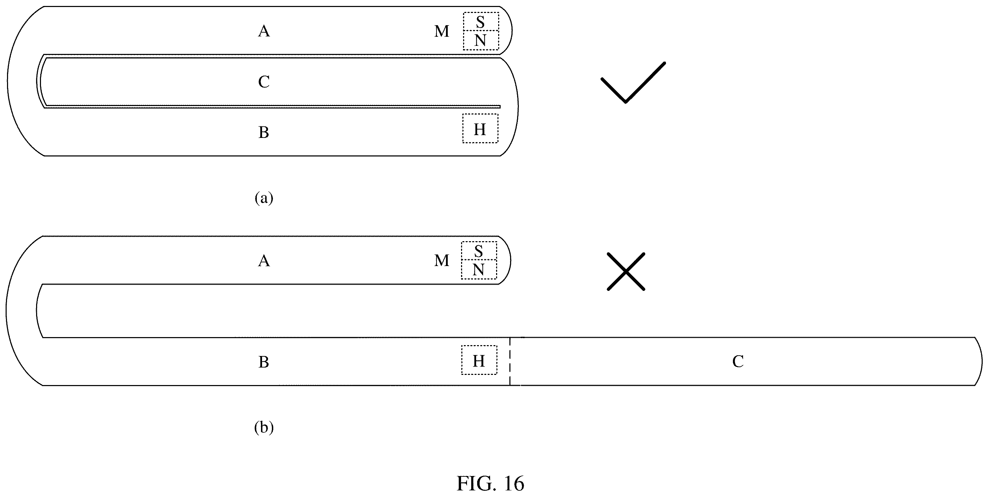

In another example, as shown in (a) in FIG. 16, a magnet M is disposed in a housing corresponding to a screen A, and a Hall effect sensor H is disposed in a housing corresponding to a screen B. In a folded form, that is, after the foldable screen is folded in a correct folding sequence, positions of the magnet M and the Hall effect sensor H correspond to each other in a thickness direction of the foldable screen (herein, for example, the Hall effect sensor H is located on a side that is of the screen B and that is close to a screen C). If the user folds the foldable screen in the correct folding sequence, that is, first folds the screen C and then folds the screen A, when the user folds the screen A after folding the screen C, blocked by the screen C, the Hall effect sensor H cannot sense the magnet M or senses very low magnetic field strength of the magnet M.

As shown in (b) in FIG. 16, if the user folds the foldable screen in an incorrect folding sequence, that is, first folds the screen A and then folds the screen C, when the user folds the screen A, the Hall effect sensor H may sense the magnet M, and as the screen A approaches the screen B, the Hall effect sensor H may sense relatively high magnetic field strength. When the magnetic field strength sensed by the Hall effect sensor is greater than target strength, the electronic device may determine a folding sequence anomaly of the foldable screen.

For the manner of disposing the Hall effect sensor in the housing corresponding to the screen A as shown in FIG. 12 and FIG. 15, alternatively, a magnet with strong magnetism may be disposed in the housing corresponding to the screen C, and no magnet is disposed in the housing corresponding to the screen B. For example, the magnet corresponding to the screen B in FIG. 12 is removed. Correspondingly, when a folding sequence of the foldable screen is correct, the Hall effect sensor in the housing corresponding to the screen A may sense the N pole of the magnet in the housing corresponding to the screen C. When a folding sequence of the foldable screen is incorrect, the Hall effect sensor in the screen A may sense the S pole of the magnet in the housing corresponding to the screen C, with relatively low magnetic field strength.

It may be understood that a manner of disposing the magnet and the Hall effect sensor is not limited to the foregoing examples. In some embodiments, a plurality of Hall effect sensors may be disposed to respectively sense a posture of the screen C relative to the screen B and a posture of the screen A relative to the screen B. A specific folding sequence detection principle is similar, and details are not described herein again.

In addition, a manner of detecting, by the electronic device, whether a folding sequence of the foldable screen is abnormal is not limited to the foregoing examples, that is, the electronic device may detect, by using another implementation, whether a folding sequence of the foldable screen is abnormal.

Considering that there may be a false triggering case when the user uses the foldable screen, to improve accuracy of a control result to improve user experience, in some embodiments of this application, the electronic device may send first prompt information when a folding sequence anomaly of the foldable screen is detected and a first target condition is met. When the user performs a folding operation, the folding operation lasts for specific duration, and the user usually touches some regions of the display screen. Based on this, in an embodiment of this application, the first target condition may include: detecting that duration of the folding sequence anomaly reaches first duration, or detecting a touch operation performed on a first target region.

The first duration may be several seconds, and a specific value may be set as required. This is not particularly limited in embodiments of this application. The first target region may be, for example, an edge region of the screen A, and a specific position may also be set as required.

In some embodiments, the electronic device may alternatively use both the foregoing two folding sequence anomaly detection manners, and send the first prompt information when detecting a folding sequence anomaly in both the foregoing two manners. To be specific, the first target condition may include that: the duration of the folding sequence anomaly reaches the first duration, or the touch operation performed on the first target region is detected, or the folding sequence anomaly is detected in a plurality of detection manners.

Considering that there may be a case of folding in an opposite direction (reverse folding for short) when the user folds the foldable screen, for example, when the foldable screen shown in FIG. 1 is folded, a correct folding manner is folding the screen A and the screen B outward, but the user may perform a misoperation, that is, fold the screen A and the screen B in an opposite direction, that is, inward, to help the user fold the electronic device in a correct folding direction and reduce an impact of reverse folding on a lifespan of the electronic device, in some embodiments of this application, the electronic device may provide a reverse folding detection function. Based on the function, reverse folding detection is performed on an operation that is performed on the foldable screen and that is for changing a magnitude of an included angle between adjacent screens of the foldable screen (this operation is referred to as a target operation herein). When it is detected that the foldable screen is folded in an opposite direction, prompt information (referred to as second prompt information herein) is sent. The following describes this process in detail.

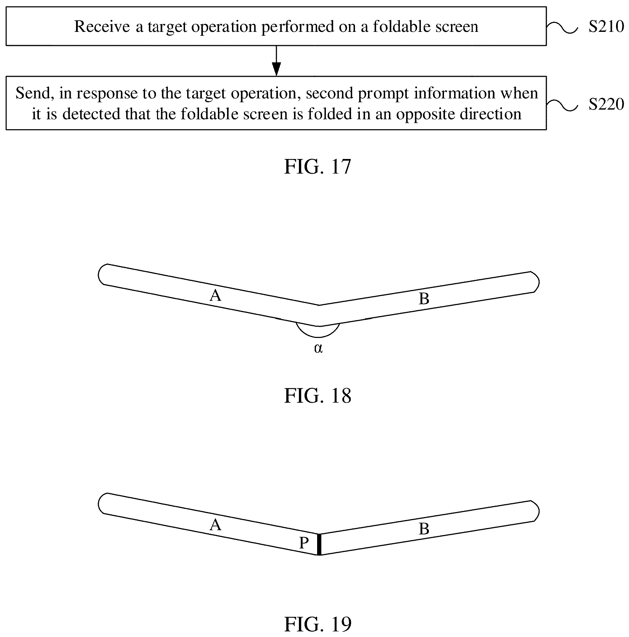

FIG. 17 is a schematic flowchart of another foldable screen control method according to an embodiment of this application. As shown in FIG. 17, the method may include the following steps.

S210: Receive a target operation performed on a foldable screen.

The target operation is for changing a magnitude of an included angle between adjacent screens of the foldable screen, and may include an unfolding operation (correspondingly making the included angle between the adjacent screens of the foldable screen larger). The unfolding operation may include a normal unfolding operation, and may include an abnormal unfolding operation or a folding operation in an abnormal folding direction, that is, a reverse folding operation. Certainly, the target operation may also include a folding operation in a normal folding direction. To be specific, reverse folding detection may be performed on any operation for changing a magnitude of an included angle between adjacent screens of the foldable screen.

The adjacent screens may be any two adjacent screens of the foldable screen, herein referred to as a first target screen and a second target screen. For example, for the foldable screen shown in FIG. 1, the first target screen and the second target screen may be the screen A and the screen B; or for the foldable screen shown in FIG. 2, the first target screen and the second target screen may be the screen A and the screen B, or may be the screen B and the screen C.

Similar to step S120, the electronic device may detect the target operation by detecting a change of an included angle of the foldable screen or by using a related switch. A specific implementation is similar, and details are not described herein again.

S220: Send, in response to the target operation, second prompt information when it is detected that the foldable screen is folded in an opposite direction.

A folding axis between the first target screen and the second target screen may be referred to as a target folding axis. In a normal folding operation, the first target screen and the second target screen may be folded around the target folding axis in a first direction. When the electronic device detects that the first target screen and the second target screen are folded in a second direction, it is detected that the foldable screen is folded in an opposite direction. The second direction is the opposite direction of the first direction.

For example, when the foldable screen shown in FIG. 1 is folded, the screen A and the screen B may be folded outward (that is, folded in an outward folding direction) around the folding axis. When the electronic device detects that the screen A and the screen B are folded inward (that is, folded in an inward folding direction) around the folding axis, it is detected that the foldable screen is folded in an opposite direction. For the foldable screen shown in FIG. 2, the screen A and the screen B may be folded inward around the folding axis 1, and the screen B and the screen C may be folded inward around the folding axis 2. The target operation may be for changing an included angle between the screen A and the screen B or for changing an included angle between the screen B and the screen C. When the electronic device detects that the screen A and the screen B are folded outward around the folding axis 1, or detects that the screen B and the screen C are folded outward around the folding axis 2, it is detected that the foldable screen is folded in an opposite direction.

The electronic device may perform reverse folding detection on every two adjacent screens of the foldable screen, and may send the second prompt information when detecting that any two adjacent screens are folded reversely. For example, for the foldable screen shown in FIG. 1, the electronic device may detect an included angle between the screen A and the screen B, to determine whether the screen A is folded reversely relative to the screen B. For the foldable screen shown in FIG. 2, the electronic device may detect an included angle between the screen A and the screen B, and an included angle between the screen B and the screen C, to determine whether the screen A is folded reversely relative to the screen B and whether the screen C is folded reversely relative to the screen B.

The following describes two implementations of detecting folding of a foldable screen in an opposite direction by using the foldable screen in FIG. 1 as an example.

**First implementation: Detect, based on a magnitude of an included angle between adjacent screens of the foldable screen, whether the foldable screen is folded reversely**

When two adjacent screens of the foldable screen are folded reversely, an included angle between the two adjacent screens is likely to exceed 180°. Based on this, the electronic device may determine, when detecting that an included angle between adjacent screens of the foldable screen is greater than a preset threshold (referred to as a second threshold below) Th2, that the foldable screen is folded in an opposite direction. The second threshold is greater than 180°, for example, may be 185°. A specific value may be determined based on required detection sensitivity. This is not particularly limited in embodiments of this application.

For a manner in which the electronic device detects the included angle between the adjacent screens, refer to related descriptions in step S120. Details are not described herein again.

For example, as shown in FIG. 18, a folding manner of a foldable screen is outward folding. The user folds the foldable screen in an incorrect folding direction, that is, folds a screen A and a screen B inward. In this case, an included angle $\alpha$ between the screen A and the screen B gradually increases from 180° under a folding force of the user. When detecting $\alpha$ > Th2, the electronic device may determine that the foldable screen is folded reversely.

**Second implementation: Detect, based on a magnitude of pressure between adjacent screens of the foldable screen, whether the foldable screen is folded reversely**

Specifically, a pressure sensor may be disposed between adjacent screens of the foldable screen. When two adjacent screens of the foldable screen are folded reversely, corresponding parts of the two adjacent screens are squeezed mutually, so that pressure increases. Based on this, when pressure detected by the pressure sensor is greater than a pressure threshold, the electronic device may determine that the foldable screen is folded in an opposite direction.

The pressure sensor may be a piezoelectric pressure sensor, a piezoresistive pressure sensor, or the like. The pressure sensor may be disposed on a side wall that is of a housing of one of the adjacent screens and that is opposite to the other screen, or may be disposed between one of the adjacent screens and a folding axis, or may be disposed on a folding axis, a middle frame, or another structure. For example, as shown in FIG. 19, a pressure sensor P is disposed on a folding axis between a screen A and a screen B.

The pressure threshold may be determined based on required detection sensitivity, and is not particularly limited herein.

Still refer to FIG. 19. A folding manner of a foldable screen is outward folding. When the user folds the foldable screen reversely, that is, folds the screen A and the screen B inward, the pressure sensor P between the screen A and the screen B is squeezed by the screen B, and pressure detected by the pressure sensor increases. When the pressure detected by the pressure sensor is greater than the pressure threshold, it may be determined that the foldable screen is folded reversely.

As described above, when detecting that the foldable screen is folded reversely, the electronic device may send second prompt information in response to the case in which the foldable screen is folded reversely. Similar to the first prompt information, the second prompt information may include prompt information for prompting a folding direction error, and may include prompt information for prompting a correct folding direction. The prompt information may include at least one of the following: interface display information, vibration information, sound information, and light information.

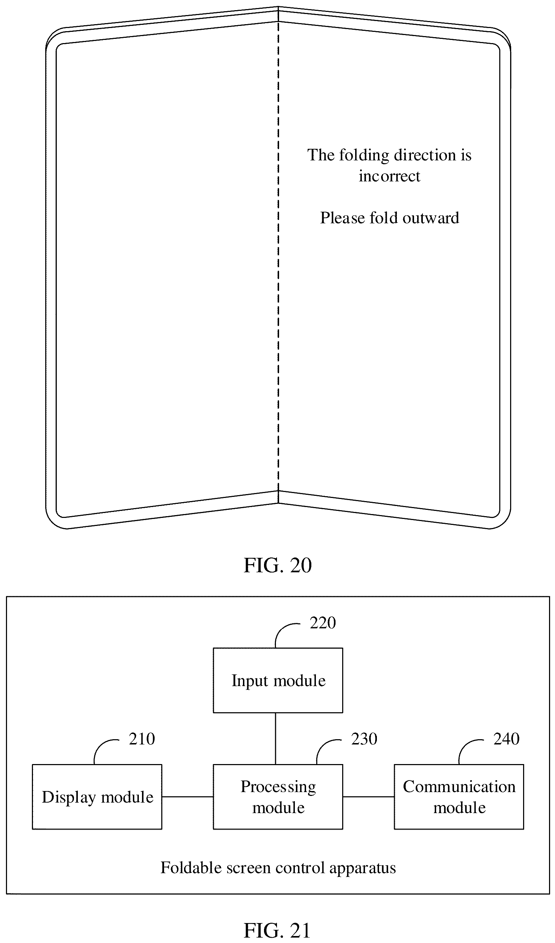

For example, as shown in FIG. 20, when detecting that the foldable screen is folded reversely, the electronic device may display interface prompt information for prompting a folding direction error: "the folding direction is incorrect", and display interface prompt information for prompting a correct folding direction: "please fold outward". The interface prompt information may be displayed, based on folding status of the foldable screen, on a screen that is easy to see by the user.

It may be understood that a manner of detecting, by the electronic device, whether the foldable screen is folded reversely is not limited to the foregoing examples, that is, the electronic device may detect, by using another implementation, whether the foldable screen is folded reversely.

Similar to the detection process of the folding sequence anomaly, to reduce false triggering and improve accuracy of a control result to improve user experience, in some embodiments of this application, the electronic device may send second prompt information when it is detected that the foldable screen is folded reversely and when a second target condition is met. When the user performs a folding operation, the folding operation lasts for specific duration, and the user usually touches some regions of the display screen. Based on this, in an embodiment of this application, the second target condition may include: detecting that duration of a reversely folded state reaches second duration, or detecting a touch operation performed on a second target region.

The second duration may be several seconds, and a specific value may be set as required. This is not particularly limited in embodiments of this application. The second target region may be, for example, an edge region of the foldable screen, and may be the same as or different from the second target region, and a specific position may be set as required.

In some embodiments, the electronic device may alternatively use both the foregoing two reverse folding detection manners, and send the second prompt information when detecting a folding sequence anomaly in both the foregoing two manners. To be specific, the second target condition may include that: the duration of the reversely folded state reaches the second duration, or the touch operation performed on the second target region is detected, or it is detected, in a plurality of detection manners, that the foldable screen is folded reversely.

It may be understood that a naming manner of various terms in embodiments of this application is merely an example, and should not be understood as a limitation on embodiments of this application. In some embodiments, a same term may also have another name. For example, the pressure threshold may also be referred to as a third threshold.

It should be further understood that the solution shown in any one of the examples or in any one of the figures may be an independent solution, or the solution formed by combining any of the plurality of examples or the solution formed by combining any of the plurality of figures may be an independent solution. This is not particularly limited in this application.

A person skilled in the art can understand that the foregoing embodiments are examples and are not intended to limit this application. In a possible case, the foregoing steps may be selectively combined to obtain one or more other embodiments. For example, in some embodiments, steps S110 and S120 and steps S210 and S220 may be combined to form one or more embodiments. An execution sequence of the steps may be adjusted. Steps S210 and S220 may be performed after steps S110 and S120, or may be performed before steps S110 and S120, or may be performed in parallel with steps S110 and S120. In another example, in some embodiments, step S120 and steps S210 and S220 may be combined. To be specific, after receiving a target operation performed on the foldable screen, the electronic device may perform steps S120 and S220 in response to the operation to perform folding sequence detection and reverse folding detection, or may perform, for a multi-fold foldable screen, step S120 when it is detected that the target operation is a folding operation, or may perform, for a foldable screen including at least two screens, step S220 when it is detected that the target operation is an unfolding operation. A person skilled in the art may randomly select a combination from the foregoing steps as required, and any combination that does not depart from essence of the solutions of this application falls within the protection scope of this application.

According to the foldable screen control method provided in embodiments, after receiving a folding operation performed by a user on the foldable screen, in response to the folding operation, the electronic device may send prompt information when detecting a folding sequence anomaly of the foldable screen. This can help the user perform folding in a correct folding sequence, improving user's operation experience, and reducing impact of user's folding errors on a service life of the electronic device.

In addition, after receiving a target operation (for changing a magnitude of an included angle between adjacent screens of the foldable screen) of the user on the foldable screen, in response to the target operation, the electronic device may send prompt information when detecting that the foldable screen is folded in an opposite direction. This can help the user perform folding in a correct folding direction, improving user's operation experience, and reducing impact of user's folding errors on a service life of the electronic device.

Based on a same concept, as an implementation of the foregoing method, an embodiment of this application provides a foldable screen control apparatus. The apparatus embodiment corresponds to the foregoing method embodiment. For ease of reading, details in the foregoing method embodiment are not described in the apparatus embodiment. However, it should be clear that the apparatus in this embodiment can correspondingly implement all content of the foregoing method embodiment.

FIG. 21 is a diagram of a structure of a foldable screen control apparatus according to an embodiment of this application. As shown in FIG. 21, the apparatus provided in this embodiment includes:
a display module 210, an input module 220, a processing module 230, and a communication module 240.

The display module 210 is configured to support the electronic device to perform an interface display operation in the foregoing embodiment and/or another process of the technique described in this specification. The display module may be a touchscreen, or other hardware, or a combination of hardware and software.

The input module 220 is configured to receive an input of a user on a display interface of the electronic device, such as a touch input, a voice input, or a gesture input. The input module is configured to support the electronic device to perform a step of receiving a user operation in the foregoing embodiment and/or another process of the technique described in this specification. The input module may be a touchscreen, or other hardware, or a combination of hardware and software.

The processing module 230 is configured to support the electronic device to perform a processing operation in each method step in the foregoing embodiment and/or another process of the technique described in this specification.

The communication module 240 is configured to support the electronic device to perform an operation related to a communication process with a cloud device and another electronic device in the foregoing embodiment and/or another process of the technique described in this specification.

The apparatus provided in this embodiment can perform the foregoing method embodiments, and implementation principles and technical effects of the apparatus are similar to those of the foregoing method embodiments. Details are not described herein.

A person skilled in the art may clearly understand that, for the purpose of convenient and brief description, division into the foregoing functional units and modules is merely used as an example for description. During actual application, the foregoing functions may be allocated to different functional units and modules for implementation as required. In other words, an internal structure of the apparatus is divided into different functional units or modules, to implement all or some of the functions described above. Functional units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for ease of distinguishing between the functional units and modules, but are not intended to limit the protection scope of this application. For a specific working process of the units or modules in the foregoing system, refer to a corresponding process in the method embodiments. Details are not described herein again.

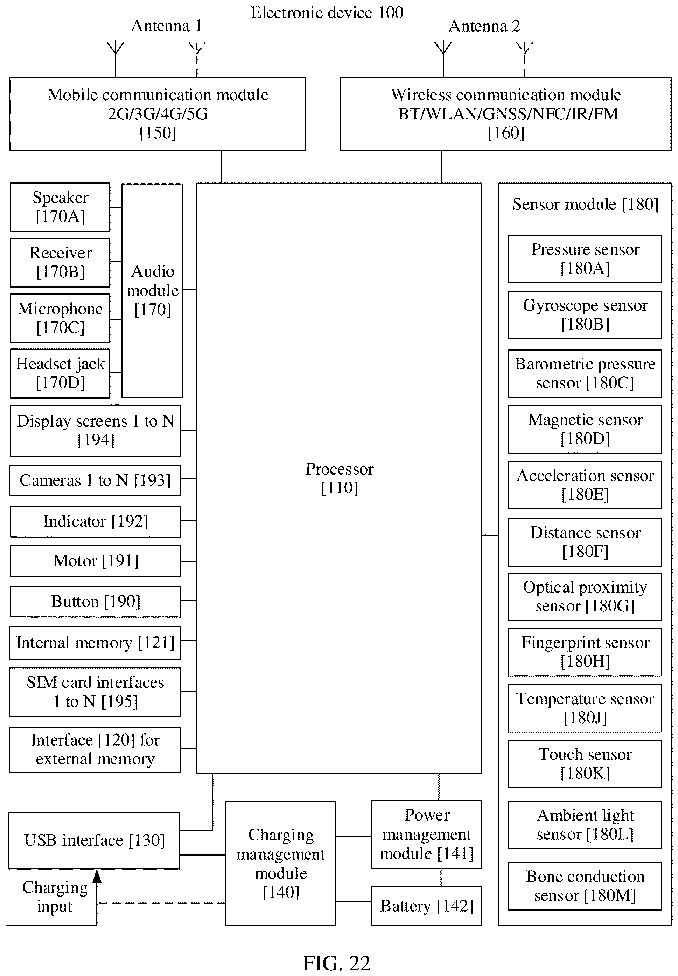

Based on a same concept, an embodiment of this application further provides an electronic device. FIG. 22 is a diagram of a structure of an electronic device according to an embodiment of this application.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory can store instructions or data that has just been used or is cyclically used by the processor 110. If the processor 110 needs to use the instructions or data again, the processor may directly call the instructions or data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). The I2S interface may be configured to perform audio communication. The PCM interface may also be configured to perform audio communication, and sample, quantify, and encode an analog signal. The UART interface is a universal serial data bus, and is configured to perform asynchronous communication. The bus may be a two-way communication bus. The bus converts to-be-transmitted data between serial communication and parallel communication. The MIPI interface may be configured to connect the processor 110 to peripheral components such as the display screen 194 and the camera 193. The MIPI interface includes a camera serial interface (camera serial interface, CSI), a display serial interface (display serial interface, DSI), and the like. The GPIO interface may be configured by software, and the GPIO interface may be configured as a control signal or a data signal. The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to perform data transmission between the electronic device 100 and a peripheral device, or may be configured to connect to a headset for playing audio through the headset. The interface may be further configured to connect to another electronic device, for example, an AR device.

It may be understood that an interface connection relationship between modules described in this embodiment of this application is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may supply power to the electronic device through the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display screen 194, the camera 193, the wireless communication module 160, and the like. The power management module 141 may be further configured to monitor parameters such as battery capacity, a battery cycle count, and battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be reused to improve antenna utilization. For example, the antenna 1 may be reused as a diversity antenna in a wireless local area network. In some other embodiments, the antenna may be used in combination with a tuning switch.

The mobile communication module 150 may provide a solution of wireless communication including 2G/3G/4G/5G or the like that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 and at least some modules in the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A or the receiver 170B), or displays an image or a video through the display screen 194. In some embodiments, the modem processor may be an independent component. In some other embodiments, the modem processor may be independent of the processor 110, and is disposed in a same device with the mobile communication module 150 or another functional module.

The wireless communication module 160 may provide a solution of wireless communication that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, in the electronic device 100, the antenna 1 is coupled to the mobile communication module 150, and the antenna 2 is coupled to the wireless communication module 160, so that the electronic device 100 can be in communication with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time division-synchronous code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GNSS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display screen 194, the application processor, and the like. The GPU is a microprocessor for image processing, and is connected to the display screen 194 and the application processor. The GPU is configured to perform mathematical and geometric calculations, and is configured for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini LED, a micro LED, a quantum dot light-emitting diode (quantum dot light-emitting diode, QLED), or the like. In some embodiments, the electronic device 100 may include one or N display screens 194, where N is a positive integer greater than 1.

The electronic device 100 may implement a photographing function through the ISP, the camera 193, the video codec, the GPU, the display screen 194, the application processor, and the like.

The ISP is configured to process data fed back from the camera 193. The camera 193 is configured to capture a static image or a video. The digital signal processor is configured to process a digital signal, and may process another digital signal in addition to the digital image signal. The video codec is configured to compress or decompress a digital video.

The NPU is a neural-network (neural-network, NN) computing processor that quickly processes input information with reference to a structure of a biological neural network, for example, a mode of transfer between human brain neurons, and may further continuously perform self-learning. Applications such as intelligent cognition of the electronic device 100 may be implemented through the NPU, for example, image recognition, facial recognition, speech recognition, and text understanding.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (such as a sound playing function and an image playing function), and the like. The data storage area may store data (such as audio data and an address book) created during use of the electronic device 100, and the like. In addition, the internal memory 121 may include a high-speed random access memory, and may further include a nonvolatile memory, for example, at least one magnetic disk storage device, a flash memory, or a universal flash storage (universal flash storage, UFS).

The interface 120 for external memory may be configured to connect to an external memory, for example, a micro SD card, to extend a storage capability of the electronic device 100. An external storage card communicates with the processor 110 through the interface 120 for external memory, to implement a data storage function. For example, files such as music and videos are stored in the external storage card.

The electronic device 100 may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device 100 may receive a key input, and generate a key signal input related to a user setting and function control of the electronic device 100. The motor 191 may generate a vibration prompt. The motor 191 may be configured to provide an incoming call vibration prompt and a touch vibration feedback. The indicator 192 may be an indicator light, and may be configured to indicate a charging state and a power change, and may also be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like.

The electronic device provided in this embodiment can perform the foregoing method embodiments, and implementation principles and technical effects of the electronic device are similar to those of the foregoing method embodiments. Details are not described herein.

An embodiment of this application further provides a computer-readable storage medium, storing a computer program. When the computer program is executed by a processor, the method in the foregoing method embodiments is implemented.

An embodiment of this application further provides a computer program product. When the computer program product runs on an electronic device, the electronic device is enabled to implement the method in the foregoing method embodiments when executing the computer program product.

An embodiment of this application further provides a chip system, including a processor. The processor is coupled to a memory, and the processor executes a computer program stored in the memory, to implement the method in the foregoing method embodiments. The chip system may be a single chip or a chip module including a plurality of chips.

All or some of the foregoing embodiments may be implemented by using software, hardware, firmware, or any combination thereof. When implemented by using software, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or transmitted through the computer-readable storage medium. The computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may understand that all or some of the processes of the methods in embodiments may be implemented by a computer program instructing related hardware. The program may be stored in a computer-readable storage medium. When the program is executed, the processes of the methods in embodiments may be performed. The foregoing storage medium may include any medium that can store program code, such as a ROM, a random access memory RAM, a magnetic disk, or an optical disc.

Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

In the foregoing embodiments, descriptions of embodiments have respective focuses. For a part that is not described in detail or recorded in an embodiment, refer to related descriptions in other embodiments.

In embodiments provided in this application, it should be understood that the disclosed apparatus/device and method may be implemented in other manners. For example, the described apparatus/device embodiments are merely examples. For example, division into the modules or units is merely logical function division and may be other division during actual implementation. For example, a plurality of units or components may be combined or integrated into another system, or some features may be omitted or not performed. In addition, the displayed or discussed mutual couplings or direct couplings or communication connections may be implemented through some interfaces. The indirect couplings or communication connections between the apparatuses or units may be implemented in electrical, mechanical, or another form.

It should be understood that, in the descriptions of the specification and the appended claims of this application, the terms "include", "comprise", "have", and any variant thereof are intended to cover a non-exclusive inclusion, and all mean "including but not limited to", unless otherwise specially emphasized. For example, processes, methods, systems, products, or devices that include a series of steps or modules are not limited to the steps or modules that are clearly listed, but may include other steps or modules that are not clearly listed or that are inherent to the processes, methods, products, or devices.

In descriptions of this application, unless otherwise specified, "/" indicates an "or" relationship between associated objects. For example, A/B may indicate A or B. In this application, "and/or" describes an association relationship between associated objects and indicates that three relationships may exist. For example, A and/or B may indicate the following three cases: Only A exists, both A and B exist, and only B exists, where A and B may be singular or plural.

In addition, in the descriptions of this application, "a plurality of" means two or more than two unless otherwise specified. "At least one of the following items" or a similar expression means any combination of these items, including a singular item or any combination of plural items. For example, at least one of a, b, or c may indicate: a, b, c, a-b, a-c, b-c, or a-b-c, where a, b, and c may be singular or plural.

As used in the specification and the appended claims of this application, the term "if" may be interpreted as "when" or "once" or "in response to determining" or "in response to detecting" depending on the context. Similarly, the phrase "if it is determined" or "if [described condition or event] is detected" may be interpreted, depending on the context, as "once it is determined" or "in response to determining" or "once [described condition or event] is detected" or "in response to detecting [described condition or event]".

In addition, in the descriptions of the specification and the appended claims of this application, the terms "first", "second", and the like are intended to distinguish between similar objects but do not necessarily indicate a specific order or sequence, and shall not be understood as an indication or implication of relative importance or implicit indication of a quantity of indicated technical features. It should be understood that the data used in such a way is interchangeable in appropriate circumstances, so that the embodiments described herein can be implemented in an order other than the content illustrated or described herein. A feature limited by "first" and "second" may explicitly or implicitly include at least one of the features.

In embodiments of this application, the word such as "example" or "for example" is intended to indicate giving an example, an illustration, or a description. Any embodiment or design scheme described as an "example" or "for example" in embodiments of this application should not be construed as being more preferred or more advantageous than another embodiment or design scheme. Exactly, use of the word such as "example" or "for example" is intended to present a related concept in a specific manner.

Reference to "an embodiment", "some embodiments", or the like described in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can still be made to some or all technical features thereof, without departing from the scope of the technical solutions of embodiments of this application.

## Claims

1.  A foldable screen control method, applied to an electronic device with a foldable screen, wherein the method comprises:

    receiving a folding operation performed on the foldable screen, wherein the foldable screen comprises a first screen, a second screen, a third screen, a first folding axis, and a second folding axis, the first folding axis is located between the first screen and the second screen and is configured to allow the first screen to be folded or unfolded relative to the second screen, the second folding axis is located between the second screen and the third screen and is configured to allow the third screen to be folded or unfolded relative to the second screen, and in a correct folding sequence, the third screen is first folded and the first screen is then folded; and

sending first prompt information in response to a folding sequence anomaly of the foldable screen in response to the folding operation.

2. The method according to claim 1, wherein the first prompt information is sent in response to the folding sequence anomaly of the foldable screen when a first target condition is met; and

the first target condition comprises that: duration of the folding sequence anomaly reaches first duration, or a touch operation performed on a first target region is detected, or the folding sequence anomaly of the foldable screen is detected in a plurality of detection manners.

3. The method according to claim 1 or 2, wherein the folding sequence anomaly of the foldable screen comprises that: a difference between a first included angle and a second included angle is less than a preset threshold, wherein the first included angle is an included angle between the first screen and the second screen, and the second included angle is an included angle between the second screen and the third screen.

4. The method according to claim 3, wherein the folding sequence anomaly of the foldable screen comprises that: the first included angle is less than a preset angle, and the difference between the first included angle and the second included angle is less than the preset threshold.

5. The method according to any one of claims 1 to 4, wherein a first magnet is correspondingly disposed in one of the first screen and the second screen, a Hall effect sensor is correspondingly disposed in the other, and a second magnet is correspondingly disposed in the third screen; in a folded form, the third screen is located between the first screen and the second screen, projections of the first magnet, the second magnet, and the Hall effect sensor overlap on the second screen, a first magnetic pole of the first magnet and a second magnetic pole of the second magnet face the Hall effect sensor, and polarity of the first magnetic pole is opposite to polarity of the second magnetic pole; and

the electronic device determines the folding sequence anomaly of the foldable screen when the Hall effect sensor senses that the first magnetic pole approaches, but does not sense the second magnetic pole or senses that magnetic field strength of the second magnetic pole is less than first strength.

6. The method according to any one of claims 1 to 4, wherein a magnet is correspondingly disposed in one of the first screen and the second screen, and a Hall effect sensor is correspondingly disposed in the other; in a folded form, the third screen is located between the first screen and the second screen, and projections of the magnet and the Hall effect sensor overlap on the second screen; and

the electronic device determines the folding sequence anomaly of the foldable screen when the Hall effect sensor senses the magnet and senses that magnetic field strength is greater than target strength.

7. The method according to any one of claims 1 to 6, wherein the first prompt information comprises: prompt information for prompting a folding sequence error and/or prompt information for prompting a correct folding sequence.

8. The method according to any one of claims 1 to 7, wherein the first prompt information comprises at least one of the following: interface display information, vibration information, sound information, and light information.

9. The method according to any one of claims 1 to 8, wherein in the folded form, a thickness of the first folding axis in a first direction is greater than a thickness of the second folding axis in the first direction, and the first direction is perpendicular to a display plane of the second screen.

10. The method according to any one of claims 1 to 9, wherein the method further comprises:

receiving a target operation performed on the foldable screen, wherein the target operation is for changing a magnitude of an included angle between a first target screen and a second target screen, the first target screen and the second target screen are two adjacent screens of the foldable screen, the first target screen and the second target screen are foldable around a target folding axis in the first direction, and the target folding axis is a folding axis between the first target screen and the second target screen; and

sending second prompt information, in response to the target operation, in response to a case in which the first target screen and the second target screen are folded in a second direction, wherein the second direction is a direction opposite to the first direction.

11. The method according to claim 10, wherein the second prompt information is sent, when a second target condition is met, in response to the case in which the first target screen and the second target screen are folded in the second direction; and
the second target condition comprises that: duration for which the first target screen and the second target screen are folded in the second direction reaches second duration, or a touch operation performed on a second target region is detected, or that the first target screen and the second target screen are folded in the second direction is detected in a plurality of detection manners.

12. The method according to claim 10 or 11, wherein that the first target screen and the second target screen are folded in the second direction comprises that: the included angle between the first target screen and the second target screen is greater than a second threshold, and the second threshold is greater than 180°.

13. The method according to any one of claims 10 to 12, wherein a pressure sensor is disposed between the first target screen and the second target screen, and the electronic device determines, when pressure detected by the pressure sensor is greater than a pressure threshold, that the first target screen and the second target screen are folded in the second direction.

14. An electronic device, comprising a memory and a processor, wherein the memory is configured to store a computer program, and the processor is configured to perform the method according to any one of claims 1 to 13 when calling the computer program.

15. A computer-readable storage medium, storing a computer program, wherein when the computer program is executed by a processor, the method according to any one of claims 1 to 13 is implemented.

16. A computer program product, wherein when the computer program product runs on an electronic device, the electronic device is enabled to perform the method according to any one of claims 1 to 13.

17. A chip system, wherein the chip system comprises a processor, the processor is coupled to a memory, and the processor executes a computer program stored in the memory, to implement the method according to any one of claims 1 to 13.

Folding axis

11  12

A  α  B

(b)

B
A

(c)

α

(a)

FIG. 1

EP 4 707 990 A1

24

Folding axis 1  Folding axis 2

α1  α2

21  23

A  C

α1  22  α2

B

(b)

Folding axis 1  Folding axis 2

Thickness direction

A
C
B

(c)

(a)

EP 4 707 990 A1

FIG. 2

Folding axis 1          Folding axis 2

24

A                    B                    C

FIG. 3

| Receive a folding operation performed on a foldable screen | S110 |

| Send, in response to the folding operation, first prompt information when a folding sequence anomaly of the foldable screen is detected | S120 |

FIG. 4

FIG. 5

FIG. 6

FIG. 7

FIG. 8

Obtain an included angle α1 between a screen A
and a screen B and an included angle α2 between
the screen B and a screen C

Yes

$\alpha 1 - \alpha 2 \geq Th1$

No

Send prompt information

FIG. 9

The folding sequence is
incorrect

Please fold the right screen
first and then fold the left
screen

FIG. 10

Abnormal
$\alpha1 < Ta$

A
B
C

FIG. 11

(a)

(b)

FIG. 12

(a)

(b)

FIG. 13

EP 4 707 990 A1

H

OUT1 (S)

OUT2 (N)

Processor

FIG. 14

(a)

(b)

FIG. 15

(a)

(b)

FIG. 16

Receive a target operation performed on a foldable screen | S210

Send, in response to the target operation, second prompt information when it is detected that the foldable screen is folded in an opposite direction | S220

FIG. 17

A          B

α

FIG. 18

A     P     B

FIG. 19

The folding direction is incorrect

Please fold outward

FIG. 20

Foldable screen control apparatus

FIG. 21

Electronic device 100

Antenna 1

Antenna 2

| Mobile communication module 2G/3G/4G/5G [150] | Wireless communication module BT/WLAN/GNSS/NFC/IR/FM [160] |

Speaker [170A]

Receiver [170B]

Audio module [170]

Microphone [170C]

Headset jack [170D]

Display screens 1 to N [194]

Cameras 1 to N [193]

Indicator [192]

Motor [191]

Button [190]

Internal memory [121]

SIM card interfaces 1 to N [195]

Interface [120] for external memory

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 22

## INTERNATIONAL SEARCH REPORT

| | International application No. |
|---|---|
| | **PCT/CN2024/095773** |

**A. CLASSIFICATION OF SUBJECT MATTER**

G06F1/16(2006.01)i

According to International Patent Classification (IPC) or to both national classification and IPC

**B. FIELDS SEARCHED**

Minimum documentation searched (classification system followed by classification symbols)

IPC:G06F1/-

Documentation searched other than minimum documentation to the extent that such documents are included in the fields searched

Electronic data base consulted during the international search (name of data base and, where practicable, search terms used)

CNABS, CNTXT, ENTXTC: 折叠, 合拢, 关闭, 三, 显示屏, 屏幕, 顺序, 错误, 出错, 有误, 异常, 提示, 提醒, 警告, 警示, 告警, 寿命, 损坏, 柔性, 夹角, 角度, 霍尔, 磁性; VEN: fold+, clos+, three, display, screen?, sequence, error, anomaly, abnormal +, warn+, prompt+, remind+, life, damag+, flexible, angel?, hall, magnet+

**C. DOCUMENTS CONSIDERED TO BE RELEVANT**

| Category* | Citation of document, with indication, where appropriate, of the relevant passages | Relevant to claim No. |
|---|---|---|
| X | CN 218631177 U (EVAK TECHNOLOGY CO., LTD.) 14 March 2023 (2023-03-14) description, paragraphs [0020]-[0025], and figures 1-3 | 1, 9 |
| Y | CN 218631177 U (EVAK TECHNOLOGY CO., LTD.) 14 March 2023 (2023-03-14) description, paragraphs [0020]-[0025], and figures 1-3 | 2-17 |
| Y | CN 110221436 A (HUAWEI TECHNOLOGIES CO., LTD.) 10 September 2019 (2019-09-10) description, paragraphs [0034]-[0057], and figures 2a-6b | 2-9, 14-17 |
| Y | CN 108563551 A (NUBIA TECHNOLOGY CO., LTD.) 21 September 2018 (2018-09-21) description, paragraphs [0048]-[0128], and figures 1-8 | 10-17 |
| A | CN 109696119 A (MANTIX DISPLAY TECHNOLOGY CO., LTD.) 30 April 2019 (2019-04-30) entire document | 1-17 |
| A | CN 110719347 A (GUANGDONG OPPO MOBILE COMMUNICATIONS CO., LTD.) 21 January 2020 (2020-01-21) entire document | 1-17 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 June 2024** | **29 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/095773** |

| C. | DOCUMENTS CONSIDERED TO BE RELEVANT | |
| --- | --- | --- |
| Category* | Citation of document, with indication, where appropriate, of the relevant passages | Relevant to claim No. |
| A | WO 2023173857 A1 (HUAWEI DEVICE CO., LTD.) 21 September 2023 (2023-09-21) entire document | 1-17 |

Form PCT/ISA/210 (second sheet) (July 2022)

## INTERNATIONAL SEARCH REPORT
### Information on patent family members

| International application No. |
| --- |
| **PCT/CN2024/095773** |

| Patent document cited in search report | | | Publication date (day/month/year) | Patent family member(s) | | | Publication date (day/month/year) |
| --- | --- | --- | --- | --- | --- | --- | --- |
| CN | 218631177 | U | 14 March 2023 | None | | | |
| CN | 110221436 | A | 10 September 2019 | CN | 210666199 | U | 02 June 2020 |
| CN | 108563551 | A | 21 September 2018 | CN | 108563551 | B | 16 July 2021 |
| CN | 109696119 | A | 30 April 2019 | CN | 109696119 | B | 12 April 2024 |
| | | | | CN | 209230517 | U | 09 August 2019 |
| CN | 110719347 | A | 21 January 2020 | US | 2020021675 | A1 | 16 January 2020 |
| | | | | US | 10637975 | B2 | 28 April 2020 |
| | | | | EP | 3594778 | A1 | 15 January 2020 |
| | | | | WO | 2020011035 | A1 | 16 January 2020 |
| | | | | IN | 201914028078 | A | 17 January 2020 |
| | | | | HK | 40019583 | A0 | 16 October 2020 |
| WO | 2023173857 | A1 | 21 September 2023 | EP | 4277246 | A1 | 15 November 2023 |
| | | | | CN | 116798311 | A | 22 September 2023 |

Form PCT/ISA/210 (patent family annex) (July 2022)

**EP 4 707 990 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311426569X